# EUROPÄISCHE PATENTSCHRIFT

(11) **EP 2 860 550 B1**
(45) Veröffentlichungstag und Bekanntmachung des Hinweises auf die Patenterteilung: **02.03.2016**
(21) Anmeldenummer: 14187274.7
(22) Anmeldetag: 01.10.2014
(51) Int. Cl.: G01S 17/42, G01S 7/481

(54) **Scanner zur Raumvermessung**
Scanner for spatial measurement
Scanner pour la mesure d'un espace

(30) Priorität: 09.10.2013 EP 13187902
(43) Veröffentlichungstag der Anmeldung: 15.04.2015
(73) Patentinhaber: Hexagon Technology Center GmbH, 9435 Heerbrugg (CH)
(72) Erfinder: Bestler, Simon, 88085 Langenargen (DE); Scheja, Jochen, 9435 Heerbrugg (CH); Hinderling, Jürg, 9437 Marbach (CH)
(74) Vertreter: Allwardt, Anke

(56) Entgegenhaltungen:
- EP-A1- 2 523 017
- EP-A1- 2 620 746
- DE-A1-102012 105 027
- US-A1- 2010 007 739

## Beschreibung

Die Erfindung betrifft ein Vermessungsgerät, insbesondere in Form eines Scanners, zur Erzeugung von massstabsgetreuen dreidimensionalen Abbildungen vermessener, interessierender Objekte.

Vermessungsgeräte oder Scanner der eingangs genannten Art sind dazu ausgebildet, einen Raumbereich und/oder ein Objekt dreidimensional zu vermessen. Typische Anwendungen sind beispielsweise die Vermessung von Innenräumen, wie Kirchen und Werkhallen, von grossen Objekten, wie Gebäuden oder Flugzeugen, oder auch die forensische Vermessung eines Unfallortes.

Zur Vermessung dieser Objekte wird mittels eines Laserscanners ein vordefiniertes Raumvolumen mit einem Laserstrahl abgetastet und das von dem Objekt reflektierte Laserlicht detektiert, wobei für jeden Zeitpunkt die Winkelinformationen für die Richtung des ausgesandten Laserstrahls und des detektierten Laserlichts erfasst werden. Über das detektierte Laserlicht lässt sich durch Triangulation und/oder Laufzeitmessung bzw. Phasenverschiebung die Distanz zwischen einem im Raumvolumen befindlichen Oberflächenpunkt und dem Messgerät bestimmen. Zusammen mit den zu diesem Oberflächenpunkt gehörenden Winkelinformationen kann die räumliche Position dieses Oberflächenpunkts errechnet werden. Aus der Folge von derart aufgenommenen Messpunkten bzw. den daraus errechneten Positionen im Raum wird mit einer entsprechenden Software ein dreidimensionales Modell der gescannten Oberfläche, des Objekts oder der gescannten Umgebung generiert, z.B. in Form einer dreidimensionalen Punktwolke.

In vielen Fällen erfolgt neben dieser rein geometrischen Erfassung der Oberflächen im Raumvolumen auch eine photographische Erfassung mittels einer Kamera. Zunächst wurde hierfür eine Übersichtskamera verwendet, die einfach auf dem Vermessungsgerät angebracht war. Die Grundprinzipien eines solchen scannenden Vermessungsgerätes mit Kamera sind in DE 20 2006 005 643 U1 erläutert.

Modernere Vermessungsgeräte dieser Art, weisen in der Regel eine Messkamera auf, die neben der Strahlungsquelle und dem Detektor für die reflektierte Strahlung im Gehäuse des Vermessungsgerätes bzw. Scanners angeordnet ist (On-Axis-Messkamera). Durch entsprechende optische Umlenkeinrichtungen kann das Sichtfeld einer solchen Kamera beispielsweise koaxial zur Messstrahloptik oder parallel dazu ausgerichtet sein. Das erfasste Bild kann auf einem Display der Anzeige-Steuereinheit des Vermessungsgeräts und/oder auf dem Display eines zur Fernsteuerung verwendeten Peripheriegeräts - wie z.B. eines Datenloggers - dargestellt werden. Allerdings müssen Verdrehungen, die das aufgenommene Bild aufgrund der Umlenkung des Kamerasichtfelds an der Strahlumlenkeinheit aufweist vor der Darstellung erst rechnerisch korrigiert werden, weshalb sich keine Echtzeitdarstellungen realisieren lassen.

Für die Aufnahme grösserer Raumvolumina werden in der Regel mehrere Bildaufnahmen von der integrierten Kamera gemacht, die anschliessend durch eine entsprechende Software zu einem einzigen Bild im Sinn eines "Panoramabildes" zusammengesetzt werden. Solche, parallel zur Abtastung, aufgenommenen photographischen Bilder erlauben zumindest die Identifikation unterschiedlicher Helligkeits- oder Farbwerte der gescannten Oberflächen. Neben der visuellen Gesamtansicht lassen sich daraus unter Umständen auch weitere Informationen, z.B. bzgl. der Oberflächentextur, gewinnen.

Nachteilig an diesen Vermessungsgeräten ist, dass durch den teilweise gemeinsamen optischen Pfad von Kamera und Messstrahlung/Reflexionsstrahlung entweder der optische Pfad der Messstrahlung/Reflexionsstrahlung durch Bestandteile der Kameraoptik beeinträchtigt wird oder umgekehrt der optische Pfad der Messkamera beeinträchtigt wird durch Messstrahlung/Reflexionsstrahlung oder optische Komponenten von deren Pfaden. Der optische Aufbau solcher Vermessungsgeräte ist kompliziert und teuer, erfordert er doch das Auskoppeln definierter Lichtanteile aus dem gemeinsamen optischen Pfad. Des Weiteren müssen für Panoramaaufnahmen, die mit solchen Vermessungsgeräten aufgenommen werden, die einzelnen Bilder, aus denen die Panoramaaufnahme zusammengesetzt wird, aufwändig durch eine entsprechende Software bearbeitet werden, da durch den ortsfesten photosensitiven Sensor (CMOS, CCD) der Kamera im Zusammenwirken mit dem um zwei Achsen sich drehenden Sichtfeld die einzelnen Bilder jeweils um unterschiedliche Winkel verdreht aufgenommen werden.

In der EP 2 620 746 A1 ist ein Vermessungsgerät mit Laserscaneinheit zur Vermessung und Darstellung von Objekten bzw. der Umgebung in Form von Punktwolken dargestellt, welches neben einer On-Axis-Vermessungskamera eine Übersichtskamera aufweist. Die Übersichtskamera weist ein Übersichts-Sichtfeld auf, das grösser ist als das Sichtfeld der On-Axis-Messkamera, so dass mit der Übersichtskamera ein grösserer Bereich des Geländes erfasst wird als mit der Messkamera. Die Übersichtskamera ermöglicht daher eine bessere Orientierung und ein schnelleres Anzielen eines gewünschten Punktes. Sie wird daher vor allem für die Orientierung im Raum eingesetzt. Die Übersichtskamera kann im Messkopf untergebracht sein und ein Sichtfeld mit fix definierter Ausrichtung haben ähnlich der Übersichtskamera aus der oben bereits erwähnten DE 20 2006 005 643 U1 oder aber die Übersichtskamera ist aussen auf der Strahlumlenkeinheit angeordnet und ihr Übersichts-Sichtfeld ist wie das Sichtfeld der On-Axis-Messkamera ebenfalls vermittels der Strahlumlenkeinheit ausrichtbar. Vorteilhaft ist hier, dass sich nicht nur das Sichtfeld sondern auch der photosensitive Sensor um die zwei Achsen dreht. Hierzu ist die Strahlumlenkeinheit mit einem optischen Kanal versehen, der die auf der Strahlumlenkeinheit angeordnete Übersichtskamera über entsprechende optische Elemente mit der reflektierend ausgebildeten Rückseite des Umlenkelementes verbindet und der Übersichtskamera einen Blick um 180° verdreht zum Sichtfeld der On-Axis-Messkamera und zur Ausrichtung der Messstrahlung ermöglicht. Der Aufbau mit der Übersichtskamera aussen auf der Strahlumlenkeinheit hat verschiedene Nachteile: Zum einen müssen zwei Kameras und zwei optische Wege für die Sichtfelder der Kameras bereitgestellt werden. Zum anderen verursacht die Positionierung der Übersichtskamera aussen an der Strahlumlenkeinheit erhebliche Unwucht und Biegemomente auf der Strahlumlenkeinheit, denen durch entsprechende Gegenmassnahmen begegnet werden muss, was zusätzliche Kosten verursacht und das System im Feldbetrieb störanfällig macht.

Die DE 10 2010 105027 A1 offenbart einen Laserscanner mit einer Kamera, die statt aussen auf der Strahlumlenkeinheit in der Strahlumlenkeinheit, im Raum hinter dem Umlenkspiegel angeordnet ist. Im Raum hinter dem Umlenkspiegel ist ausserdem ein optisches Umlenkelement angeordnet, welches das Sichtfeld der Kamera derart umleitet, dass es vom Kameraobjektiv via ein Fenster in einer Wandung der Strahlumlenkeinheit um 180° verdreht zur Ausrichtung des ausgesandten Messstrahls in die Umgebung ausgerichtet ist. Die Kamera blickt also bezüglich des ausgesandten Messstrahls immer in die genau entgegengesetzte Richtung. Wie die Strahlumlenkeinheit und die Kamera im einzelnen ausgestaltet sind, ob als Übersichtskamera mit grossem Sichtfeld oder als Messkamera mit kleinerem Sichtfeld, und wie die Kamera und das optische Umlenkelement in der Strahlumlenkeinheit fixiert sind, ist in DE 10 2010 105027 A1 nicht offenbart.

Durch die mit der Strahlumlenkeinheit mitrotierenden Kameras, wie sie in DE 10 2010 105027 A1 und EP 2 620 746 A1 offenbart sind, ist zwar das Problem der verdrehten Bilder gelöst, welche bei den bisherigen On-Axis-Kameras durch die Verdrehung des Kamerasichtfelds gegenüber dem ortsfesten Kamerasensor entstanden sind, Echtzeitaufnahmen stehen dem Benutzer aber nach wie vor nicht zur Verfügung. Auch die Kalibrierung eines solchen Geräts beleibt zeitaufwendig und muss beim Hersteller vorgenommen werden. Eine Nachkalibrierung vor Ort ist kaum möglich. Bei der Bestimmung der Raumkoordinaten unter rechnerischer Berücksichtigung der systemimmanenten Fehler, wie Kippachsschiefe etc. müssen nach wie vor komplexe Algorithmen eingesetzt werden, mittels derer die um 180° zueinander verdrehte Blickrichtung von Messkamera und Messstrahlung bei der Bestimmung der Raumkoordinaten berücksichtigt werden kann.

Es ist daher Aufgabe der vorliegenden Erfindung, ein Vermessungsgerät der eingangs genannten Art mit Kamera zur Verfügung zu stellen, das einen grösseren/flexibleren Einsatzbereich eröffnet und die oben beschriebenen Nachteile vermeidet.

Wenigstens eine dieser Aufgaben wird durch ein Vermessungsgerät gemäss dem unabhängigen Anspruch gelöst. Merkmale, welche die Erfindung in alternativer oder vorteilhafter Weise weiterbilden, sind den abhängigen Patentansprüchen zu entnehmen.

Ein erfindungsgemässes Vermessungsgerät, insbesondere ein Scanner, zum optischen Vermessen einer Umgebung durch scannendes Aussenden von Messstrahlung weist ein Gehäuse auf, das auf einer Basis drehbar um eine Basisachse gelagert ist, wobei in dem Gehäuse eine Strahlungsquelle zur Erzeugung von Messstrahlung und eine Strahlenoptik für ein Ausleiten der Messstrahlung aus dem Gehäuse untergebracht sind. Die Strahlenoptik dient auch einem Weiterleiten von aus der Umgebung von einem gescannten Objekt als Reflexionsstrahlung zurückkommender reflektierter Messstrahlung auf einen im Gehäuse befindlichen Detektor, wobei Messstrahlung und Reflexionsstrahlung wenigstens teilweise einen gemeinsamen optischen Pfad haben. In dem gemeinsamen optischen Pfad ist eine Strahlumlenkeinheit vorgesehen, die im Gehäuse drehbar um eine Rotationsachse gelagert ist und der einstellbaren, gerichteten Aussendung der Messstrahlung (Zielachse) in die Umgebung und zum Einfangen der Reflexionsstrahlung aus der Umgebung dient (Scanrichtung). Des Weiteren weist das Vermessungsgerät eine Messkamera zur Aufnahme photographischer Bilder von der zu scannenden oder gescannten Umgebung auf, die in die Strahlumlenkeinheit und insbesondere in einen Rotationskörper der Strahlumlenkeinheit integriert ist, so dass sie bei einer Rotationsbewegung der Strahlumlenkeinheit um ihre Rotationsachse mit der Strahlumlenkeinheit mitrotiert. Die Messkamera besitzt ein Sichtfeld und ist derart ausgerüstet und in der Rotationseinheit angeordnet, dass ihr Sichtfeld in die gleiche Richtung ausgerichtet ist wie die durch ein Strahlumlenkelement der Strahlumlenkeinheit in die Umgebung ausgesandte Messstrahlung. Außerdem ist eine Verarbeitungs- und Steuerungseinheit zur Daten- und Bildverarbeitung und zur Steuerung des Vermessungsgeräts vorgesehen.

Besonders einfach lässt sich die Messkamera in die Strahlumlenkeinheit integrieren, wenn die Strahlumlenkeinheit in ihrem Rotationskörper eine Ausnehmung aufweist, in welche die Kamera eingesetzt werden kann, oder, wenn der Rotationskörper als Hohlkörper ausgebildet ist. Unwucht- und Biegephänomene, die sonst auftreten können, werden so auf ein Minimum reduziert bzw. ganz vermieden ebenso wie komplizierte optische Sichtfeldumlenkungen. Dies erlaubt eine einfachere und damit kostengünstigere Ausgestaltung des Vermessungsgeräts.
Die Ausrichtung der Kamera mit ihrem Sichtfeld in Richtung der Messstrahlung, erlaubt es, photographische Bilder des zu vermessenden Objekts oder der zu vermessenden Umgebung jeweils gleichzeitig mit der Ausrichtung der Messstrahlung auf das Objekt bzw. in die Umgebung aufzunehmen. Somit sind Echtzeitaufnahmen des aktuell vermessenen Objekts möglich. Die für die Ausrichtung und Erfassung der für die Bestimmung der Raumkoordinaten eines Zielpunktes nötigen Daten, nämlich die Erfassung von zwei Winkelkoordinaten und der Entfernung des Zielpunktes, benötigen durch diesen Messaufbau weniger Zeit, weil Ausrichtung und Erfassung aller Daten inklusive Entfernung nun gleichzeitig erfolgen können. Da die Ausrichtung des Gerätes für die Aufnahme eines photographischen Bildes (Ausrichtung der Kamera) und die Erfassung der Winkelkoordinaten und der Distanz (Ausrichtung der Messstrahlung) die gleiche ist, vereinfachen sich auch die Algorithmen zur Berücksichtigung von Systemfehlern, wie Kippachsschiefe, Fehler in der Kollimationsachse etc.. Die korrekte Zuordnung von Bildpunkten eines photographisch mittels der Kamera aufgenommenen Bildes zu drei Raum-Koordinaten eines Zielpunktes ist einfacher und erfordert weniger Rechenleistung bei geringerer Fehleranfälligkeit.

Insgesamt kann also mit einer einfacheren Software gearbeitet werden und es wird weniger Rechenleistung benötigt. Sämtliche Funktionen von bisherigen On-Axis-Messkameras, das heisst von Messkameras, wie sie üblicherweise bisher in scannende Vermessungsgeräte eingebaut waren, können auch mit einer Messkamera wie vorgeschlagen ausgeführt werden.

Die angegebenen Vorteile ergeben sich sowohl mit einer in die Strahlumlenkeinheit integrierten Messkamera, deren Sichtfeld mit seitlichem Versatz in die gleiche Richtung ausgerichtet ist wie die durch das Strahlumlenkelement der Strahlumlenkeinheit in die Umgebung ausgesandte Messstrahlung, als auch und dies noch besser - mit einer Messkamera, deren Sichtfeld koaxial in die gleiche Richtung ausgerichtet ist wie die ausgesandte Messstrahlung.

Für die Ausrichtung des Sichtfeldes koaxial in die gleiche Richtung mit der Messstrahlung, ist die Messkamera vorteilhaft auf der Rückseite des Strahlumlenkelements im Rotationskörper angeordnet, wobei das Strahlumlenkelement als dichroitischer Strahlteiler, insbesondere als dichroitischer Spiegel ausgebildet ist, der im Wesentlichen nur die Wellenlänge der Messstrahlung umlenkt und für andere Wellenlängen transparent ist. Die Kamera ist dann vorteilhaft mit ihrem Objektiv in gleicher Richtung mit der ausgesandten Messstrahlung und koaxial zu ihr hinter dem Strahlteiler angeordnet.

Ebenso denkbar ist aber natürlich auch eine Anordnung der Kamera mit in Richtung der Messstrahlung ausgerichtetem Objektiv aber mit leichtem Versatz zu dieser, z.B. wenn die Platzverhältnisse oder Unwucht eine koaxiale Anordnung nicht erlauben. Mit leichtem Versatz kann die Kamera aber auch im Rotationskörper mit dem Objektiv in Richtung der Messstrahlung in bzw. an der Rotationskörperwand befestigt sein, wobei sie entweder in/an der strahlseitigen oder der gegenüberliegenden Wand befestigt ist und sich das Sichtfeld durch eine Öffnung in der Rotationskörperwand erstreckt.

Das lokale, instrumentengebundene Koordinatensystem eines Scanners wird durch Parameter wie Winkelabweichungen und Offsets der Dreh- und Zielachsen beschrieben. Wichtige Kalibrierungsparameter sind: Kippachsenschiefe, der horizontale und der vertikale Fehlwinkel der Laserzielrichtung, der Winkelfehler und die Position des Umlenkelements bzw. des Drehspiegels, die Schiefe der Drehachse (hier in der Regel als Rotationsachse bezeichnet) zur Stehachse (hier in der Regel als Basisachse bezeichnet), etc.. Die Kalibrierung eines Scanners gemäß Stand der Technik ist wegen seines komplexen internen opto-mechanischen Aufbaus und der Anordnung der Laserstrahlelemente recht anspruchsvoll. Die Bestimmung dieser Parameter wird daher initial vor der Auslieferung des Geräts durch eine Werkskalibrierung ermittelt, zum Beispiel basierend auf einer 2-Lagen-Messung, wie sie in EP 2 523 017 A1 beschrieben ist.

Eine schnelle, effiziente Feldkalibrierung basierend auf einer 2-Lagen-Messung gelingt mit den bisherigen Scannern nicht, so dass dem Nutzer des Geräts die Bestimmung der aktuellen Parameter vor Ort bisher nicht möglich ist. Zwar sind in der Literatur Anleitungen und mathematische Modelle zur Kalibrierung zu finden, diese sind aber für Geräteaufbauten gegeben, die mit dem realisierten opto-mechanischen Aufbau des gegebenen Scanners in der Regel nicht übereinstimmen, so dass sie zur präzisen Bestimmung des Koordinatensystems dieses Scanners unbrauchbar sind. Sind die Koordinaten von Referenzpunkten vorher nicht bekannt und ist nur ein Datensatz einer 2-Lagen-Messung aus einer einzigen Instrumentenaufstellung vorhanden, so können mit den in der Literatur gegebenen Modellen die gewünschten Parameter nicht bestimmt werden. Ohne Lageinformationen der Referenz- bzw. Zielpunkte ist das Ausgleichsproblem bei der Auswertung eines Datensatzes aus einer 2-Lagen-Messung singular, und die Kalibrierparameter sind nicht vollständig bestimmbar.

Mit der in der Rotationseinheit des Scanners untergebrachten optischen Kamera kann eine Kalibrierung basierend auf einer 2-Lagen-Messung nun neu auch gestützt auf frei gewählten Fixpunkten durchgeführt werden, ohne dass deren absolute oder relative Koordinaten bekannt sein müssen. Das heisst es können beliebige Bezugspunkte für die 2-Lagen Messung gewählt werden. Das zur Bestimmung der Kalibrierparameter zugeordnete Ausgleichsproblem ist regulär und damit lösbar. Der Nutzer des erfindungsgemäßen Geräts hat somit nun die Möglichkeit, alle nötigen Parameter mit ausreichender Genauigkeit selbst zu bestimmen, und zwar jederzeit und auch vor Ort, im Feld. Er hat also auch die Möglichkeit die Parameter zu überprüfen und gegebenenfalls neu zu bestimmen, wenn sich bei Feldgebrauch aufgrund von Witterungseinflüssen (Temperaturänderung, Feuchtigkeitsänderungen etc.) oder bei Einsatz des Geräts über eine längere Zeitspanne (Geräteerwärmung) Änderungen der Parameter ergeben.

Da die in die Strahlumlenkeinheit integrierte Messkamera mit dieser mitrotiert, können die Fehler der Messkamera sowohl in der Horizotalkollimation und im Vertikalindex als auch die Bestimmung der Kippachsschiefe automatisiert bestimmt und die Messkamera zum Achssystem des Messinstrumentes automatisiert kalibriert werden (hier stehen Kippachse und Rotationsachse synonym füreinander). Dabei kann entweder nur die Fehlerbestimmung automatisiert sein, und das Anvisieren, insbesondere das zweite Anvisieren eines Bezugspunktes erfolgt per Hand, oder aber auch das zweite Anvisieren des Bezugspunktes, d.h. Drehung von Gehäuse und Rotationskörper erfolgen über Motoren ebenfalls automatisiert.

Hierfür wird ein Zielobjekt mit der Messkamera unter bekannter Winkellage ein erstes Mal aufgenommen; das Gehäuse wird 180° um die Basisachse gedreht und die Kamera in der Rotationseinheit um 180° um die Rotationsachse und das Zielobjekt wird ein weiteres Mal von der Messkamera aufgenommen. Die so erhaltenen Bilder werden zur Deckung gebracht und Abweichungen markanter Bildpunkte in den Aufnahmen werden dazu genutzt, Abweichungen der Rotationsachse und der Basisachse aus der Horizontalen bzw. Vertikalen zu bestimmen und das Gerät bzw. die Messkamera entsprechend zu kalibrieren. Da es keine Bildverdrehungen gibt, die mit Hilfe eines Algorithmus herausgerechnet werden müssen, wie dies bisher bei On-Axis-Kameras der Fall war, werden systematische und evtl. durch den Algorithmus bedingte Fehler vermieden.

Mit der bereits kalibrierten Messkamera kann dann die Lage des Laserstrahls der Scaneinheit in Bezug zum Achssystem kalibriert werden: Sind die Kamerafehler bezüglich der Rotationsachse 4 und der Basisachse 11 mittels 2-Lagen-Messung bekannt, kann für eine Kalibrierung des Lasers ein Scan von dem gleichen Objekt angefertigt werden. Wird dann die Lage markanter Merkmale des Objekts in der aus dem Scan generierten Punktwolke mit der Lage derselben markanten Merkmale der Kameraaufnahme verglichen, kann anhand der daraus bestimmten Abweichungen der Laser kalibriert werden.

Für besondere Präzisionsansprüche kann das Zielobjekt zusätzlich mit dem Laser aus wenigstens zwei Lagen gescannt werden, wobei dann die markanten Punkte in der einen Punktwolke mit denjenigen der anderen Punktwolke verglichen und zu den entsprechenden Punkten in den photographischen Aufnahmen der Kamera in Bezug gesetzt werden.

Statt einer oder mehrerer 2-Lagen-Messung von einem Objekt mit markanten Merkmalen ist es auch möglich eine oder mehrere 2-Lagen-Messung von einem Reflektor und danach statt eines Scans eine Einpunktmessung von dem Reflektor zu machen, um Kamera und Laser zu kalibrieren. Im Servicefall kann das Vermessungsgerät mit bereits vorhandenen Justagewerkzeugen aus der Geodäsie justiert und kalibriert werden. Diese Kalibrierung ist möglich unabhängig von der eingesetzten Kamera, ihrer Optik oder Aufnahmetechnik (siehe weiter unten).

Mit der in die Strahlumlenkeinheit integrierten und mit dieser mitrotierenden Messkamera, deren Sichtfeld ausserdem in die gleiche Richtung ausgerichtet ist wie die Messstrahlung, ist es für die Bestimmung der Fehler in der Horizotalkollimation und im Vertikalindex ausreichend mit einem einzigen, beliebig wählbaren Bezugspunkt zu arbeiten. Soll auch der Fehler der Kippachsschiefe bestimmt werden, benötigt man einen zweiten Bezugspunkt in Schrägvisur, also einen Bezugspunkt, der innerhalb eines Horizontalwinkel- und Vertikalwinkelbereichs von etwa 30° bis 160° bezüglich der Ausgangsposition des Vermessungsgeräts liegt (Normalkonfiguration des Vermessungsgeräts: 0° entspricht Ausrichtung der Messstrahlung vertikal nach oben; 90° entspricht Messstrahlausrichtung horizontal).

Das bedeutet, dass nun auch eine Kalibrierung des Vermessungsgerätes vor Ort durchgeführt werden kann. Die Kalibrierung vor Ort erfolgt mittels 2-Lagen-Messung, wobei die vollständige Kalibrierung (Fehler in der Horizotalkollimation, im Vertikalindex und der kippachsschiefe) mit Hilfe von zwei Bezugspunkten durchgeführt wird, wobei ein Bezugspunkt oder auch beide Bezugspunkte beliebig gewählt werden können. Die Koordinaten des einen beliebig gewählten Bezugspunktes bzw. der beiden beliebig gewählten Bezugspunkte werden dann erst bei Durchführung der 2-Lagen-Messung bestimmt. Dies erhöht die Flexibilität und die Einsatzmöglichkeiten des Vermessungsgerätes erheblich.

Besonders vorteilhaft ist in dem Vermessungsgerät ein Display vorgesehen, welches derart mit der Messkamera und/oder einem Bildspeicher der Messkamera verbunden ist, dass auf ihm durch die Kamera aufnehmbare (Livebilder) und/oder bereits aufgenommene photographische Bilder darstellbar sind. In einer vorteilhaften Weiterbildung des Geräts ist es möglich die auf dem Display dargestellten Bilder mit einem Fadenkreuz zu überlagern, so dass die Messkamera in einfacher Weise zum anvisieren von Zielen eingesetzt werden kann.

Als Fadenkreuz werden in dieser Anmeldung alle Arten von Anzielmarkierungen bezeichnet, die das genaue Anvisieren eines Zieles erleichtern und wie sie in verschiedensten Varianten aus dem Stand der Technik bekannt sind, z.B. als Anzielhilfen aus der Waffentechnik (Absehen), aus der Geodäsie oder beispielsweise auch aus der Seefahrt.

Besonders vorteilhaft ist der Rotationskörper als Hohlkörper ausgebildet und die Messkamera axial zur Rotationsachse im Rotationskörper der Strahlumlenkeinheit angeordnet. Dabei ist sie vorteilhaft entweder fix mit dem Rotationskörper oder auch fix mit der sich konzentrisch zur Rotationsachse erstreckenden Antriebswelle des Rotationskörpers der Strahlumlenkeinheit verbunden, so dass sie mit diesen mitdreht. Das Strahlumlenkelement ist dann als dichroitischer Strahlteiler ausgebildet, der im Wesentlichen nur die Wellenlänge der Messstrahlung umlenkt und für andere Wellenlängen transparent ist und das Sichtfeld der Kamera ist über den dichroitischen Strahlteiler und entsprechende optische Umlenkelemente entweder mit Versatz, besonders vorteilhaft aber koaxial in gleiche Richtung wie die Messstrahlung ausgerichtet. Der durch den als Hohlkörper ausgebildeten Rotationskörper in axialer Richtung zur Verfügung stehende Bauraum erlaubt die Verwendung grösserer Kameraoptiken als dies ein Einbau der Kamera in denselben Hohlraum aber senkrecht zur Rotationsachse erlauben würde. Durch diese spezielle Art des Kameraeinbaus wird daher der Einsatzbereich der Messkamera und somit des Vermessungsgeräts selbst flexibler und grösser. Auch ist an dieser Position die Kamera leichter bezüglich Energieversorgung und/oder Datentransfer mit den Räumen ausserhalb des Rotationskörpers verbindbar, beispielsweise über einen Schleifkontakt oder über eine Durchführung in der Welle.

Denkbar wäre hier natürlich ebenso eine Ausrichtung des Sichtfeldes mittels Umlenkelementen in gleiche Richtung mit der Messstrahlung aber mit Versatz durch ein Fenster in der Wandung des Rotationskörpers.

Vorteilhaft wird eine leichte Kamera als Messkamera verwendet, die einen geringen Energiebedarf hat.

Um Bilder in verschiedenen Distanzen aufnehmen zu können, weist die Messkamera vorteilhaft ein Digitalzoom auf. Denkbar ist aber auch ein miniaturisierter mechanischer Zoom, wie er aus Handykameras bekannt ist, oder die Fokuseinstellung mittels einer oder mehrerer kontrolliert deformierbarer Linsen.

Es ist aber auch denkbar zwei Messkameras mit unterschiedlichen Brennweiten in die Strahlumlenkeinheit zu integrieren: eine Messkamera für Nahfeldaufnahmen und eine Messkamera für Fernfeldaufnahmen. Natürlich ist es möglich, dass jede dieser beiden Messkameras für ihren jeweiligen Aufnahmebereich mit einem Zoom ausgestattet ist.

Je nach Anforderung an das Vermessungsgerät werden mit Vorteil unterschiedliche Kamera-Konzepte genutzt, wie beispielsweise Lichtfeldkameras auch als plenoptische Kameras bezeichnet, wie sie z.B. von "Reytrix" vertrieben werden und mit denen bei starrer Optik nahezu beliebig fokussierbare Bilder erzeugbar sind. Es können Kameras mit manuell einstellbarem Fokus und/oder mit Autofokusfunktion eingesetzt werden. Auch der Einsatz von Kameras mit gezielt deformierbaren Linsen, wie Polymerlinsen oder Flüssiglinsen, deren Brennweite und - bei Flüssiglinsen- deren Keil dynamisch durch Aktuatoren eingestellt werden, sind mit Vorteil als Messkamera einsetzbar.

Die Verwendung einer RIM-Kamera (Range Imaging Kamera) erlaubt es, eine erste grobe 3D-Punktwolkenaufnahme eines Bereichs zu generieren, bevor mit der Scaneinheit dieser Bereich oder ein daraufhin ausgewählter Teilbereich präzise abgescannt wird.

Weiter ermöglicht der Einsatz einer Wärmebildkamera, auch als thermographische Kamera bezeichnet, in Kombination mit 3D-Aufnahmen für Häuser oder Industrieanlagen die eindeutige, da auch in die Tiefe reichende Identifizierung von Wärmequellen bzw. Wärmelecks, die dann z.B. auch mit Sollwerten in einem BIM bzw. CAD vergleichbar sind.

Auch der Einsatz einer hochauflösenden eindimensionalen Zeilenkamera ist denkbar, wobei diese vorzugsweise mit ihrer Pixelzeile parallel zur Rotationsachse ausgerichtet im Rotationskörper angeordnet ist, da dies eine gute Zuordnung der Pixel zu den Raumkoordinaten ermöglicht. Beim Zusammenfügen der Zeilenaufnahmen zu einem Gesamtbild bzw. bei der Belichtungssteuerung im Zusammenspiel mit der Steuerung der Rotationsbewegung spielt die in solch einem Gerät verfügbare präzise Winkelmessung in horizontaler und vertikaler Richtung eine wesentliche Rolle.

Die Auflösung der aufgenommenen Bilder erfolgt vorzugsweise winkelaufgelöst. Während bei einem herkömmlichen Kamerachip die Pixel in einer Ebene angeordnet sind, sind bei einer hochauflösenden Zeilenkamera, die Pixel nur in einer Dimension linear angeordnet und können dadurch viel dichter gepackt werden. Die Bildauflösung ist dadurch in der Regel bei Zeilenkameras viel besser als bei CCD-Kameras und die mit solchen Kameras aufgenommenen Bilder können in der Regel viel schneller ausgelesen und verarbeitet werden. Rotiert man die beschriebene Zeilenkamera - vorzugsweise um die Rotationsachse bei konstanter Basisachse - entsteht ein 2-dimensionales Rundum-Bild des umgebenden Raumes. Mit einer 20kpix Kamera kann beispielsweise in sehr kurzer Zeit ein 360°-Rundum-Bild mit einer Auflösung von 400Mpix generiert werden. Für die Aufnahme eines solchen Bildes dauert eine Drehung um 360° um die Rotationsachse beispielsweise ca. 4s, wobei die Lichtempfindlichkeit der Kamerasensoren zu berücksichtigen ist; je lichtempfindlicher die Kamerasensoren umso geringer die Belichtungszeiten und umso schneller die Erstellung der Aufnahme.

Bei einer ausreichend kurzen Belichtungszeit ist es möglich hochaufgelöste, bewegte Bilder (kleine Filme) als Realtimeaufnahmen über den vorzugsweise durch Rotation um die Rotationsachse erfassbaren Raum aufzunehmen, was insbesondere bei der Bauwerksüberwachung und/oder zur rechtzeitigen Erkennung von kritischen Verformungen sehr vorteilhaft eingesetzt werden kann.

Um die Belichtungszeiten bei gleicher Bilderrate zu verlängern, ist es möglich die Rotationsachse zusätzlich zur Rotation um ihre Rotationsachse in eine überlagerte Rotationsschwingung zu versetzen. Dabei wird jeweils zum Zeitpunkt der Geschwindigkeitsumkehr ein Bild aufgenommen. Für die Rotationsschwingung wird die Eigenschwingung des Systems genutzt. Das System umfasst dabei im Allgemeinen die Strahlumlenkeinheit mit dem die Kamera tragenden Rotationskörper und wenigstens einen Teil der den Rotationskörper antreibenden Welle sowie den die Welle antreibenden Motor.

Eine andere Möglichkeit die Belichtung bei gleicher Bilderrate zu verbessern, besteht darin Stroboskopblitzlichter einzusetzen. Für eine gute Ausleuchtung am vorteilhaftesten sind die Stroboskoplichter konzentrisch bezüglich der Kameraoptik angeordnet und rotieren mit. Um noch flexibler bezüglich der Kameraeigenschaften zu sein, ist es möglich, in die Strahlumlenkeinheit einen Kamerahalter zu integrieren, der zur Aufnahme von gegeneinander austauschbaren Kameras, z.B. mit unterschiedlichen Brennweiten, unterschiedlicher Optik oder unterschiedlichen Aufnahmegeschwindigkeiten oder Aufnahmetechniken (RIM-Kamera, Zeilenkamera, thermographische Kamera) dient. Dieser Kamerahalter kann in Rotationskörper einer Strahlumlenkeinheit integriert sein, der für die Aufnahme einer Kamera oder auch für die Aufnahme von zwei Kameras ausgebildet ist. Unabhängig davon ob im Rotationskörper eine oder mehr Kameras fix installiert oder austauschbar integriert sind, ist mit Vorteil als in die Strahlumlenkeinheit integrierte Messkamera eine Kamera aus folgender Gruppe von Kameras vorzusehen: eine Fernfeldkamera, eine Nahfeldkamera, eine Kamera mit digitalem Zoom, eine Kamera mit miniturisiertem mechanischem Zoom, eine Kamera mit manuell einstellbarem Fokus, eine Kamera mit Autofokusfunktion; eine Kamera mit Flüssiglinse; eine plenoptische Kamera, eine HDR-Kamera, eine RIM-Kamera, eine hochauflösende eindimensionale Zeilenkamera, eine Hochgeschwindigkeitskamera oder eine Wärmebildkamera oder eine andere Spezialkamera.

Zur Versorgung der Messkamera(s) mit elektrischer Energie ist vorteilhaft eine Stromquelle, insbesondere eine aufladbare Stromquelle, in die Strahlumlenkeinheit integriert. Besonders vorteilhaft ist die aufladbare Stromquelle zugleich als Auswuchtelement für die Strahlumlenkeinheit fungieren.

Um gezielt einzelne Ausschnitte der Umgebung mit der Messkamera photographisch festhalten zu können, ist im Gehäuse des Vermessungsgerätes vorteilhaft ein Verstellmechanismus vorgesehen, mit dem die Strahlumlenkeinheit zusammen mit der integrierten Messkamera motorisch gesteuert und/oder manuell, insbesondere mittels Drehverstellknöpfen, rotierend um die Rotationsachse und drehend um die Basisachse ausrichtbar ist. Für das manuelle Anzielen eines Ausschnitts kann vorteilhaft das Livebild auf dem Display verwendet werden.

Als ein Hilfsmittel besonderer Art, kann im Vermessungsgerät ein Neigungssensor zur Messung einer Neigung des Vermessungsgeräts relativ zum Gravitationsvektor vorgesehen sein. Die Verarbeitungseinheit ist dann vorteilhaft derart konfiguriert, dass ein Messwert für die Ausrichtung der Messstrahlung und/oder eine photographische Bildaufnahme in Abhängigkeit von einer gemessenen Neigung korrigiert werden können. Dieses ist besonders hilfreich, wenn das Messgerät während der Messung oder Bildaufnahme, z.B. wegen eines weichen Untergrundes, leicht wegrutscht oder verkippt, oder auch wenn es von Anfang an nicht eben steht, und die Messwerte und die zugehörigen photographischen Bilder in Bezug gesetzt werden sollen zu einem externen Koordinatensystem.

In einer bevorzugten Ausführungsform weist das Vermessungsgerät einen Einzelpunktmessmodus auf, innerhalb dessen ein Zielpunkt mit Hilfe der Messkamera anvisiert wird, wobei das von der Kamera erfasste Bild des anvisierten Ziels vorzugsweise auf einem Display dargestellt wird und insbesondere auch mit einem Fadenkreuz überlagert werden kann. Ausserdem werden im Einzelpunktmessmodus die Entfernung zum Zielpunkt und die Winkelkoordinaten des Zielpunkts automatisch erfasst und daraus die Raum-Koordinaten des Zielpunkts ermittelt. Die Winkelkoordinaten können dabei aus den von den Winkelencodern der Rotationsachse und der Basisachse aufgenommenen Winkeldaten während Ausrichtung der Messkamera auf den Zielpunkt ermittelt werden,. Hierfür sind natürlich alle Ausführungsformen besonders vorteilhaft einsetzbar, deren integrierte Messkamera eine optische Achse aufweist, die koaxial mit der optischen Achse der Messstrahlung ausgerichtet ist.

In einer besonders bevorzugten Ausführungsform ist die Messkamera mit einem zuschaltbaren Filter versehen, mit dessen Hilfe sie gegen eine Überlastung durch zu grosse Lichtintensitäten schützbar ist, so dass der mit der Kamera anvisierte Zielpunkt auch ein kooperatives Ziel, wie z.B. ein retroreflektierendes Prisma sein kann.

Die Messkamera kann somit als eine sehr genaue Anzielhilfe genutzt werden, ähnlich einer Theodolitenfunktion, so dass das Vermessungsgerät auch sehr genau kalibriert werden kann in seiner theodolitenähnlichen Funktion und in seiner Scanfunktion, insbesondere bezüglich Zielachsenfehlern in Azimutrichtung und Stehachsrichtung, Kippachsschiefe, Spiegelfehler und Laserstrahlausrichtung (siehe auch 2-Lagen-Messung weiter oben), wobei hier auch Hilfsmittel zum Einsatz kommen können, wie sie für Theodoliten bekannt sind.

Mit einem Vermessungsgerät, wie es in seinen verschiedenen Ausführungsformen vorangehend beschrieben ist, ist es in einfacher Weise möglich, ein Messverfahren durchzuführen, bei dem die Ausrichtung des Vermessungsgerätes bezüglich der zu vermessenden Umgebung oder des zu vermessenden Objekts mit Hilfe der Messkamera erfolgt.

Anschliessend an die genaue Ausrichtung des Vermessungsgeräts bezüglich der zu vermessenden Umgebung oder des zu vermessenden Objekts mit Hilfe der Messkamera kann ein voller Vermessungsscan über diese Umgebung oder dieses Objekt durchgeführt werden oder es kann auch nur ein definierter Teilbereich davon gescannt werden. Die Ausrichtung des Vermessungsgerätes mit Hilfe der Messkamera erlaubt vorteilhaft eine genauere Platzierung des Messgerätes.

Alternativ dazu werden nach der Ausrichtung des Vermessungsgerätes bezüglich der zu vermessenden Umgebung oder des zu vermessenden Objekts mit Hilfe der Messkamera vom Benutzer einzelne Punkte der Umgebung / des Objekts anvisiert, welche Eckpunkte der zu vermessenden Umgebung / des zu vermessenden Objekts bzw. von dessen Projektionsfläche darstellen und mit deren Hilfe die Grenzen des zu scannenden Raumes definiert werden können. Zu jedem der anvisierten Punkte werden die Winkelkoordinaten bestimmt oder es wird - was nicht zwingend nötig ist, weil die Distanzdaten nicht zwingend benötigt werden - eine Einzelpunktmessung durchgeführt, das heisst, es werden die Winkellage und die Entfernung zum Zielpunkt bestimmt und daraus die Raum-Koordinaten des Zielpunktes, d.h. seine Position im Raum abgeleitet. Anschliessend wird nur ein durch die Winkelkoordinaten oder die 3D-Koordinaten der Einzelpunktmessungen definierter Raum mittels eines Vermessungsscans/Feinscans vermessen. Durch dieses Verfahren wird ein sonst für diese Zwecke eingesetzter Grobscan, der bis zu zwanzig Minuten dauern kann, überflüssig, und ein gewünschter Raumausschnitt kann nach viel kürzerer Vorbereitungszeit vermessen werden. Zur Definition des zu vermessenden Objekts bzw. von dessen Projektionsfläche können wenigstens drei Punkte vermessen werden, die eine Projektionsfläche aufspannen oder es können bei einer entsprechenden Programmierung zwei Punkte vermessen werden, die eine Diagonale einer rechteckigen Projektionsfläche definieren, oder es kann auch ein einzelner Punkt anvisiert und in seinen Koordinaten bestimmt werden und dann ausgehend von diesem einen Punkt in einem vom Benutzer bestimmten Umkreis um diesen Punkt ein Feinscan durchgeführt werden.

Durch den erfindungsgemässen Aufbau des Vermessungsgeräts können während des Vermessungsscans photographische Bilder von der Messkamera aufgenommen werden, wobei die Zeitpunkte, zu denen Bilder aufgenommen werden, so abgestimmt sind auf das Sichtfeld der Messkamera und die Rotationsgeschwindigkeit der Strahlumlenkeinheit um die Rotationsachse und die Drehgeschwindigkeit des Messkopfes um die Basisachse, dass bei einem Aneinanderfügen der aufgenommenen Bilder ein Panoramabild entsteht. Somit erhält man eine Echtzeit-Panoramaaufnahme des gescannten Objekts / der gescannten Umgebung und spart die Zeit für einen zusätzlichen Scan zur Aufnahme von photographischen Bildern. Hierzu ist es besonders vorteilhaft, eine Hochgeschwindigkeits- oder hochauflösende Zeilenkamera als Messkamera zu verwenden, insbesondere eine RIM Zeilenkamera.

Je nach Qualität der verwendeten Kamera und Verwendungszweck der aufgenommenen Bilder kann es sein, dass die Bildqualität der während eines Scans aufgenommenen Bilder nicht ausreichend ist. Dann können die Bilder während eines langsamen Scans oder durch manuelle Ausrichtung des Sichtfeldes der in die Strahlumlenkeinheit integrierten Messkamera aufgenommen werden.

In einer weitern vorteilhaften Ausführungsform kann das Vermessungsgerät eine Laserstrahlquelle aufweisen, die Laserlicht im für die Kamera sichtbaren Bereich emittiert und deren Licht vorzugsweise derart vom Messgerät aus in die Umgebung abgesandt wird, dass der Auftreffort mit der Messkamera beobachtet werden kann. Mit anderen Worten das sichtbare Laserlicht wird vorzugsweise in Richtung des Sichtfeldes der Messkamera ausgesandt. Hierzu kann das für die Kamera sichtbare Laserlicht beispielsweise koaxial zur optischen Achse der Messkamera in deren optischen Pfad eingekoppelt werden, oder einfacher und kostengünstiger parallel mit wohl definiertem, bekanntem Versatz zur optischen Achse der Kamera ausgesandt werden. Der Versatz darf dabei nur so gross sein, dass sich der ausgesandte Laserstahl im Sichtfeld der Messkamera befindet. Ist der Laserstrahl und dessen Auftreffpunkt auf einem Objekt mittels der Messkamera verfolgbar bzw. sichtbar, also z.B. auch auf dem Display zusammen mit dem von der Kamera aufgenommenen photographischen Bild darstellbar, so lässt sich ein interessierender Punkt auf einem Objekt noch einfacher und genauer anvisieren. Noch genauer ist ein Anvisieren Möglich, wenn dem Bild eine Zielmarkierung, wie beispielsweise ein Fadenkreuz überblendbar ist. Der anzuvisierende Zielpunkt kann ortsfest oder beweglich sein.

In einer besonderen Ausführungsform ist die Laserstrahlquelle, welche Laserlicht im für die Messkamera sichtbaren Bereich emittiert, identisch mit der Strahlungsquelle, welche die Messstrahlung für die Distanzmessung aussendet. Hierzu kann Die Strahlungsquelle als Messstrahlung beispielsweise IR-Laserlicht aussenden, das durch eine Faser geleitet wird, so dass es zu einer Durchmischung des Laserlichtes kommt und die schliesslich ausgesandte Messstrahlung anteilsmässig IR-Licht (ca. 90%) und Weisslicht (ca. 10%) enthält. Die vom Objekt zurückfallende Reflexionsstrahlung wird nach Weisslichtanteil und IR-Anteil aufgeteilt, wobei der IR-Anteil über einen Filter oder elektronisch ausgefiltert und für die Distanzmessung dem Detektor zugeleitet wird, während der Weisslichtanteil von der Kamera aufgenommen wird. Die ausgesandte Messstrahlung der Elektronischen Distanzmesseinheit (EDM) kann so zur Belichtung der mitrotierenden Kamera genutzt werden. Wie bereits gesagt, muss die Kamera hierzu derart angeordnet sein, dass sich die ausgesandte Messstrahlung im Sichtfeld der Kamera befindet.

In einer Fortentwicklung dieser Ausführungsform kann die im Rotationskörper befindliche mitrotierende Kamera, welche die Messstrahlung beobachtet, genutzt werden, um einen Drift zwischen Kamera und Messstrahlung zu detektieren.

In einer anderen Weiterentwicklung dieser Ausführungsform wird zu jedem Messpunkt der Elektronischen Distanzmesseinheit ein Lichtpunkt von der Kamera aufgenommen, der die Farbe und Helligkeit des Messobjektes in diesem Punkt wiedergibt. Dadurch wird sozusagen ein Farbscan ermöglicht, der die bisherige Bildaufnahme überflüssig macht. Da allerdings der von der Messkamera beobachtbare Laserlichtpunkt bei hohen Rotationsgeschwindigkeiten auf einem mehrere Pixel umfassenden Kamera-CCD verschmiert, wird der Farbwert für diesen Lichtpunkt vorteilhaft über den gesamten Sensor integriert.

In einer Variante zu dieser Ausführungsform kann die Kamera als HDR-Kamera ausgestaltet sein, so dass eine hoch dynamische Auflösung bezüglich Helligkeit und/oder Farbe möglich ist.

Neben der oben beschriebenen Methode zur Farbbestimmung mittels Weisslichtanteil in der Messstrahlung ist es natürliche auch denkbar, in analoger Weise einen RGB-Laser, wie er beispielsweise für Minibeamer entwickelt wurde, für die Farbbestimmung eines Objekts einzusetzen. Ausserdem ist auch die Verwendung folgender Prinzipien zur Farbbestimmung denkbar, z.B. Pin-Diode, Spektralanalyse über ein Prisma oder ein Gitter mit Lineararray, CCD, C-Mos, Fotodioden(-array) und ähnliches.

In einer anderen Ausführungsform wird berücksichtigt, dass genau genommen für jeden Farbmesspunkt nur eine 1-Pixel-Information benötigt wird. Der bisher benötigte, viele Pixel umfassende 2D-Kamerasensor (Flächensensor) wird daher durch einen nur wenige Pixel oder nur einen Pixel umfassenden Sensor ersetzt und die Kameraoptik vereinfacht, was Kosten spart.

In einer weiteren Variante zu dieser Ausführungsform ist der Kollimator für das Aussenden der mit dem Weisslichtanteil versehenen Messstrahlung neben der Kamera im Rotationskörper angeordnet, während sich die Strahlungsquelle im Gehäuse befindet und das Laserlicht über eine Faser dem Kollimator zugeleitet wird. Die Faser ist beispielsweise durch eine mit einem entsprechenden Durchführungskanal ausgebildete Antriebswelle hindurchgeführt, welche den Rotationsköper mit dem Motor verbindet. Die Faser weist zum Ausgleich der Rotation eine entsprechende Rotationskupplung auf, wie sie dem Fachmann geläufig ist.

Besonders Vorteilhaft weist das Umlenkelement, an welchem die eintreffende Reflexionsstrahlung in Richtung des Detektors umgelenkt wird, zentral eine für die Messstrahlung transparente Öffnung auf, hinter der der Kollimator angeordnet ist. Neben dem Kollimator ist die Kamera im Rotationskörper derart angeordnet, dass ihr Sichtfeld in die gleiche Richtung ausgerichtet ist, in welche die Messstrahlung mittels des Kollimators durch die transparente Öffnung des Umlenkelementes in die Umgebung ausgesandt wird, so dass der für die Kamera sichtbare Weisslichtanteil der Messstrahlung im Sichtfeld der Kamera liegt und von ihr beobachtet werden kann.

Vorteilhaft bei der oben beschriebenen Ausführungsform ist, dass es nur zu geringen Abschattungen des Empfangspfades der Reflexionsstrahlung durch die kleine transparente Öffnung im Umlenkelement/Rotationsspiegel kommt. Dadurch dass die Messstrahlung auf ihrem Weg in die Umgebung nicht mehr über das Umlenkelement umgelenkt wird, nimmt der Fehler, welcher üblicherweise aufgrund der Deformation des Umlenkelementes/Rotationsspiegels zweimal auftritt nur einmal (Empfangspfad) auf, so dass dieser Fehler verringert wird. Auch der negative Einfluss der Deformation des Rotationskörpers auf die Strahlstabilität der Messstrahlung bzw. Reflexionsstrahlung halbiert sich und die Intensitätsverluste/Laserverluste werden ebenfalls reduziert. Außerdem lassen sich mit einem solchen Aufbau Laserfehler mittels 2-Lagen-Messung kalibrieren.

Den negativen Einfluss von Deformationen des Rotationskörpers (aufgrund von Unwucht und/oder rotationsbedingten Fliehkräften) lassen sich weiter verringern, wenn der Rotationskörper durchgehend ausgebildet ist und auf einer Seite auf der den Rotationskörper antreibenden Welle abgestützt ist und auf der gegenüberliegenden Seite z.B. mittels eines Kugellagers im Gehäuse abgestützt ist. Ein Lichtpfad im Rotationskörper erlaubt der Messstrahlung und Reflexionsstrahlung den Weg zum Umlenkelement und von diesem in die Umgebung bzw. zum Detektor und allenfalls auch des einfallenden Lichtes zur Kamera. Am einfachsten ist der Rotationskörper hierfür als Hohlzylinder ausgebildet.

Statt die Messstrahlung mit einem Weisslichtanteil zu versehen, der von der Kamera beobachtbar ist, kann aber auch eine von der Strahlungsquelle der Messstrahlung separate Laserlichtquelle für die Aussendung des für die Messkamera sichtbaren Lichts vorgesehen sein. Diese kann entweder selbst neben der Kamera im Rotationskörper der Strahlumlenkeinheit angeordnet sein, wobei die Energieübertragung und der Datenaustausch für die Steuerung der Laserlichtquelle wie bei der in den Rotationskörper integrierten Kamera kapazitiv, induktiv, über Schleifkontakt etc. erfolgt. In einer anderen Variante ist nur der Kollimator für dieses Laserlicht neben der Kamera im Rotationskörper angeordnet, analog zur oben beschrieben Anordnung für die Messstrahlung, und sendet das für die Messkamera sichtbare Laserlicht so aus, dass es in das Sichtfeld der Kamera fällt. Wobei der Kollimator analog der obigen Beschreibung über eine Lichtführende Faser mit der Laserquelle verbunden ist, die sich beispielsweise im Gehäuse befindet.

In einer besonderen Ausführungsform die Laserlichtquelle, die das für die Kamera sichtbare Laserlicht ausstrahlt und von dem Objekt reflektiert wird Teil einer Distanzmessvorrichtung, wobei die Messkamera als Sensor der Distanzmessvorrichtung dient, so dass eine Distanzmessung direkt beim Anzielen des Objekts mittels der Messkamera vorgenommen werden kann. Da die Distanz der Laserlichtquelle des für die Messkamera sichtbare Laserstrahls zu den lichtempfindlichen Sensoren der Messkamera innerhalb des Scanners bekannt ist, kann die Distanzmessung beispielsweise sehr einfach und effizient mit Hilfe des Triangulationsverfahrens vorgenommen werden. Die Distanzmessung kann aber auch nach dem Laufzeitprinzip oder dem Prinzip der Phasenmessprinzip erfolgen.

Die Ausrichtung des Vermessungsgerätes kann auch eine "freie Stationierung" umfassen. Mit Hilfe der Messkamera können auf einfache Weise Referenzpunkte eines übergeordneten Koordinatensystems anvisiert werden und deren Lage bezüglich des Vermessungsgerätes mittels Einzelpunktmessung, d.h. mittels Distanzmessung und Erfassung der Winkelkoordinaten bestimmt werden. Die Koordinaten der so erfassten Referenzpunkte des übergeordneten Koordinatensystems können dann genutzt werden um die Position und Orientierung des Vermessungsgerätes im Feld wie bei einem Theodoliten zu bestimmen, so dass eine "freie Stationierung", ein "vorwärts- und rückwärts Anschneiden" und ein "Anhängen an Altpunkte" möglich ist. Eine durch das Vermessungsgerät generierte Punktwolke lässt sich somit von vorneherein im übergeordneten System referenzieren.

Aufgrund der geringen Masse der Strahlumlenkeinheit mit der integrierten Kamera kann die Messkamera auch als "Sucher" eingesetzt werden. Dies kann zum Beispiel genutzt werden, um vom bekannten Standort aus Neupunkte zu setzen oder für "stack out" Anwendung oder ein so genanntes "Targetting".

Die Kamera und ihre Steuerung können vorteilhaft mit einer interaktiven Bildverarbeitung, die besonders vorteilhaft auch mit integrierter Muster- bzw. Bilderkennung (feature extraction) versehen ist, ausgerüstet sein.

Die Nutzung der Messkamera als Sucher kann beispielsweise wie folgt aussehen: In einer Chemieanlage soll beispielsweise ein definierter Abschnitt einer bestimmten Rohrleitung, der z.B. defekt ist, aufgesucht werden. Das Vermessungsgerät ist mit einer Bildverarbeitungssoftware versehen, wobei die Bildverarbeitungssoftware in diesem Kontext eine Muster- bzw. Bilderkennung aufweist. Die Koordinaten des gesuchten Abschnitts sind bekannt und werden dem Vermessungsgerät, das insbesondere als Scanner ausgebildet ist, übermittelt. Der Kamera des Vermessungsgeräts wird zur Zielverfolgung ein markantes Erkennungsmuster "gezeigt", das beispielsweise ein abstrahiertes Muster, ein Bild oder ein markanter Gegenstand sein kann oder ein Bild oder abstrahiertes Muster des Gegenstands. Der Gegenstand kann z.B. in bekannter Weise ein Retroreflektor oder besser ein Tablet PC oder ein interaktives Smartphone oder eine markante Ecke davon, oder aber ein auf dem Display dieser Geräte generiertes spezielles Erkennungsmuster oder Bild sein, das gut von der Bildverarbeitungssoftware mit ihrer Muster- bzw. Bilderkennung erkennbar ist. Das integrierte Muster- bzw. Bilderkennungsprogramm der Kamera wird aktiviert und das Muster bzw. Bild abgespeichert als zu verfolgendes Zielobjekt. Der Scanner kann daher mit seiner Kamera das Zielobjekt verfolgen und an den gewünschten Ort schicken, wobei die Raumwinkel des verfolgten Zielobjekts aufgrund der Daten der Winkelencoder in Rotationsachse und Basisachse bekannt sind und laufend (kontinuierlich oder diskontinuierlich in bestimmten Zeitintervallen) mit den Zielkoordinaten verglichen werden. Ist das verfolgte Ziel ein Tablet PC oder interaktives Smartphone, können die Richtungsanweisungen zum Aufsuchen des Zielortes vorteilhaft an dieses externe Gerät übermittelt werden ebenso wie eine Stoppmeldung, wenn das von der Kamera verfolgte Ziel (Tablet PC / Smartphone) an den Koordinaten des Zielortes eintrifft.

Statt eines Zielortes als gesuchtem Ziel, ist es auch denkbar, eine Bewegungsbahn als Ziel vorzugeben, auf dem sich das durch Bilderkennung erkannte Zielobjekt (Reflektor oder Smartphone etc.) bewegen soll. Die Bewegungsbahn kann dabei in Form von 3D-Koordinaten im Raum vorgegeben sein, wobei jede 3D-Koordinaten einem Zeitpunkt t1 bis ti zugeordnet ist, so dass die Reihenfolge, in welcher die 3d-Koordinaten "abzulaufen" sind durch die aufeinanderfolgenden Zeitpunkte t1 bis ti definierte sind.

Eine andere Möglichkeit die Kamera als Sucher einzusetzen besteht darin der Kamera das Erkennungsmuster eines gesuchten Objekts zu übermitteln, wobei das Erkennungsmuster ein abstrahiertes Muster des Objekts oder eine realitätsnahe Abbildung oder eine photographische Abbildung des Objekts sein kann. Das Bild wird durch die Bildverarbeitungssoftware bzw. die Muster- bzw. Bilderkennung der Scannerkamera als Referenzbild erfasst und abgespeichert. Anschliessend sucht die Kamera mit Hilfe der Bildverarbeitungssoftware und ihrer Muster- bzw. Bilderkennung die Umgebung nach dem gesuchten Objekt ab und gibt, wenn das Objekt gefunden wurde, schliesslich nach einer Zielausmessung (Distanz und Winkelkoordinaten) die Koordinaten des gesuchten Objekts für den Benutzer aus. Weitere Anwendungen können beispielsweise in der Architektur das Anzeichnen der Eckpunkte eines Fensters auf einer Wand mit sichtbarem Laserlicht oder im Bauhandwerk die Markierung eines Bohrlochs und vergleichbare Dinge sein.

Ist eine Kommunikationsschnittstelle zwischen Tablet PC und/oder Smartphone vorgesehen, so können das Vermessungsgerät und diese externen Geräte mittels entsprechender Software so konfiguriert werden, dass die Ausrichtung und Bildaufnahme der Messkamera und/oder auch die Steuerung der Scaneinheit via diese externen Geräte erfolgen kann.

Für all diese Anwendungen ist das hier vorgestellt Vermessungsgerät vorteilhaft einsetzbar, da die Strahlumlenkeinheit mit der integrierten Kamera aufgrund ihrer im Vergleich zum Theodoliten geringen Masse und da ihr Sichtfeld in gleicher Richtung ausgerichtet ist wie die Messstrahlung ein schnelleres Tracking erlaubt als dies mit einem Theodoliten möglich wäre, und weil es zum anderen gegenüber einem Lasertracker, der bisher oft für Bohrlochmarkierungen und ähnliches herangezogen wurde, präziser und robuster gebaut ist, so dass es weniger störanfällig bei Anwendungen im Aussenbereich und auf Baustellen ist.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Gleiche Elemente sind in den Figuren mit gleichen Bezugszeichen gekennzeichnet. Im Einzelnen zeigen die Figuren rein schematisch:
- Fig.1: eine erste Ausführungsform eines erfindungsgemässen Vermessungsgeräts ohne Stativ;
- Fig.2: die erfindungsgemässe Strahlumlenkeinheit aus dem erfindungsgemässen Vermessungsgerät der Figur 1 in Schnittansicht;
- Fig.3: in gleicher Darstellung wie Fig. 2 eine alternative Ausführungsform einer erfindungsgemässen Strahlumlenkeinheit;
- Fig.4: eine weitere Ausführungsform einer erfindungsgemässen Strahlumlenkeinheit;
- Fig.5: noch eine weitere Ausführungsform einer erfindungsgemässen Strahlumlenkeinheit;
- Fig.6: noch eine weitere Ausführungsform einer erfindungsgemässen Strahlumlenkeinheit;
- Fig. 7: noch eine weitere Ausführungsform einer erfindungsgemässen Strahlumlenkeinheit;
- Fig. 8 und 9: zwei Varianten einer weiteren Ausführungsform eines erfindungsgemässen Vermessungsgeräts in einer Darstellung mit Teilen des Gehäuses;
- Fig. 10: noch eine weitere Ausführungsform einer erfindungsgemässen Strahlumlenkeinheit

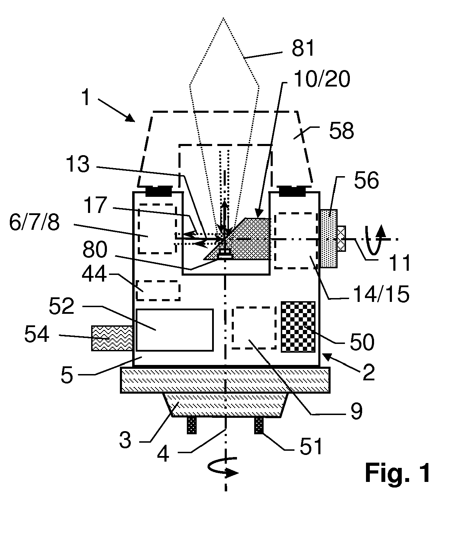

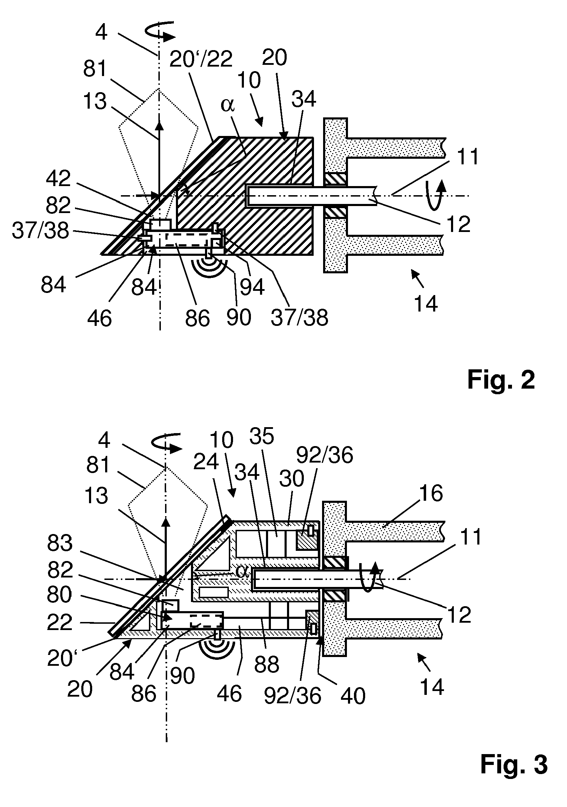

Figur 1 zeigt eine erste Ausführungsform eines erfindungsgemässen Vermessungsgeräts 1, und Figur 2 zeigt im Detail hierzu eine erfindungsgemäss ausgebildete Strahlumlenkeinheit 10. Das Vermessungsgerät 1 ist, wie üblich, mit einem Messkopf 2 ausgestattet, dessen Gehäuse 5 auf einer Basis 3 um eine Basisachse 4 drehbar gelagert ist. Die Basis 3 kann mittels eines Adapters 51 auf einem Träger oder Stativ befestigt werden. Die Basis 3 verfügt über eine Basisachse 4, um welche das Gehäuse 5 - von Hand und/oder motorgetrieben und durch eine Steuereinheit 9 kontrolliert - drehbar ist. Im Gehäuse sind eine Strahlungsquelle 6 zur Erzeugung von Messstrahlung 13 und ein Detektor 8 zur Detektierung eingefangener und vorzugsweise an einem Zielobjekt reflektierter Reflexionsstrahlung 17 vorgesehen, sowie optische Komponenten 7 für die Strahlleitung und Kollimierung der Mess- und Reflexionsstrahlung 13, 17. Strahlungsquelle 6 und Detektor 8 sind Bestandteil einer Elektronischen Distanzmesseinheit, kurz auch als EDM bezeichnet. Auf einer der Strahlungsquelle 6, dem Detektor 8 und den optischen Komponenten 7 gegenüberliegenden Seite des Gehäuses 5 ist im Gehäuse 5 eine Strahlumlenkeinheit 10 mit einem Strahlumlenkelement 22 (siehe Figur 2) abgestützt, mittels derer die Messstrahlung 13 kontrolliert, ausgerichtet in die Umgebung ausgesandt und die Reflexionsstrahlung 17 eingefangen wird. Hierzu ist die Strahlumlenkeinheit 10 angetrieben durch einen Motor 15, rotierbar um eine Rotationsachse 11 gelagert. Der Motor 15 ist seinerseits in einem Motorengehäuse 14 gelagert innerhalb des Gehäuses 5 des Messkopfes 2. Der aktuelle Drehwinkel an den beiden Achsen 4, 11 wird jeweils durch dort angeordnete Winkelencoder erfasst und der Steuereinheit 9 übermittelt.

Der Schnittpunkt von Basisachse 4 und Rotationsachse 11 entspricht in der Regel dem Auftreffpunkt des gebündelten Messstrahls 13 auf dem Umlenkelement 22. Das Umlenkelement 22 der Strahlumlenkeinheit 10 ist um einen Winkel α gegenüber der Rotationsachse 11 geneigt, der üblicherweise 45° beträgt. Durch Drehung des Messkopfes 2 um die Basisachse 4 und Rotation der Strahlumlenkeinheit 10 um die Rotationsachse 11 ist es möglich, einen dreidimensionalen Scan durchzuführen. Laserstrahlquelle 6, Detektor 8, Optik 7 und Strahlumlenkeinheit 10 bilden zusammen mit den entsprechenden Teilen der Rechen- und Steuereinheit 9 und ihren Bewegungsmöglichkeiten um die Basisachse 4 und die Rotationsachse 11 eine Scaneinheit des Vermessungsgeräts 1.

In dem hier gezeigten Beispiel umfasst die Strahlumlenkeinheit einen massiven Rotationskörper 20 aus Metall, dessen Stirnseite 20' mit einem dichroitischen Strahlteiler als Umlenkelement 22 versehen ist. Im Rotationskörper befindet sich eine Ausnehmung 46, in welcher eine Messkamera 80 fixiert ist(siehe Figur 2). Beispielhaft umfasst die hier dargestellte Messkamera 80 ein Kameragehäuse 84 und eine Kameraoptik 82 und ist mit einer aufladbaren Stromquelle 86 versehen. Ausserdem weist sie gemäss dieser Ausführungsform eine Übertragungseinheit 90 bzw. einen Transmitter/Transceiver auf zur Übertragung von Bilddaten, Messkoordinaten, Steuerdaten (zum Beispiel zum Auslösen der Kamera), um diese z.B. an die bzw. von der internen Verarbeitungs- und Steuereinheit 9 im Gehäuse 5 oder auch von und an externe Geräte zu übermitteln wie eine Fernsteuerung, einen Computer, einen Datenlogger, ein Tablet PC oder ein Smartphone. In dem hier gezeigten Beispiel handelt es sich bei der Übertragungseinheit 90 um eine umschaltbare Infrarot- und Funkschnittstelle es wäre aber auch Bluetooth®- oder WiFi-Übertragung denkbar. Über ein Lade-Interface 94, das in diesem Fall als Buchse für das Einstecken eines Ladekabels ausgebildet ist, kann die Stromquelle 86 der Kamera 80 bei Stillstand der Strahlumlenkeinheit 10 aufgeladen werden. Die in die Strahlumlenkeinheit 10 integrierte Messkamera 80 rotiert bei Drehung der Strahlumlenkeinheit 10 um deren Rotationsachse 11 mit, wobei die Ausnehmung 46 im Rotationskörper 20 der Strahlumlenkeinheit 10 so angeordnet ist, dass die Messkamera 80 mit ihrem Sichtfeld 81 koaxial in die gleiche Richtung ausgerichtet ist wie der Messstrahl bzw. die Messstrahlung 13. Sie blickt also sozusagen koaxial in die gleiche Richtung wie der Scanner.

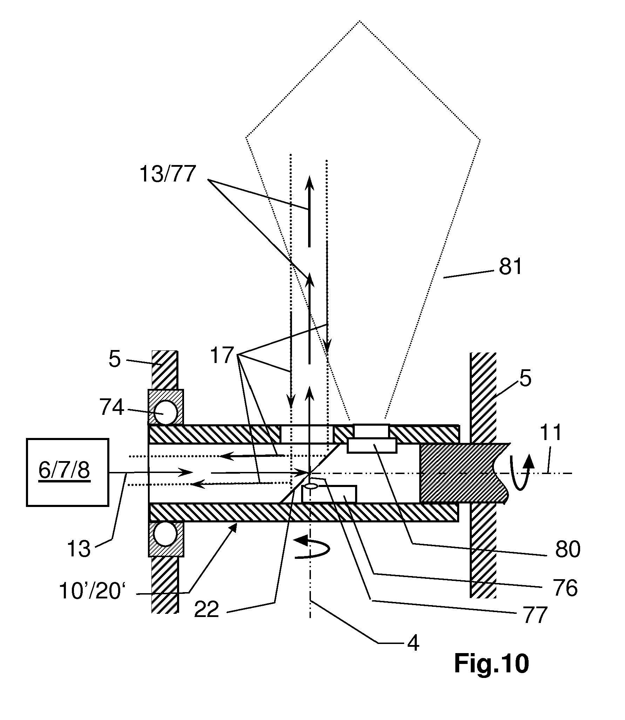

Die Messkamera kann zur Aufnahme von Bildern des zu vermessenden Objekts verwendet werden oder auch zur Ausrichtung des Messgeräts auf ein Zielobjekt. Hierzu wird die Bildinformation, welche die Kamera "sieht", in Echtzeit auf einem Display 52 abgebildet (Livebild), wobei optional ein Fadenkreuz überlagert werden kann. Ist zudem, was optional möglich ist, eine Laserlichtquelle vorhanden, die für die Messkamera sichtbares Laserlicht emittiert (vgl. Fig. 10), wobei das Laserlicht vorzugsweise im Sichtfeldbereich der Kamera ausgesandt wird, kann auch der sichtbare Laserstrahl mit der Kamera verfolgt werden und auf diese Weise ein Ziel sehr genau anvisiert werden. Die Winkelkoordinaten des anvisierten Ziels sind aus dieser Anvisierung (Winkelstellung der Messkamera) bereits bekannt. Die Distanz des Zielortes kann dann ermittelt werden entweder mit der Scaneinheit des Vermessungsgerätes - oder, falls die Laserlichtquelle des für die Messkamera sichtbaren Laserlichts mit einer Entfernungsmesseinheit bzw. einer entsprechend konfigurierten Verarbeitungs- und Steuereinheit des Vermessungsgeräts verbunden ist, was optional möglich ist, auch unmittelbar mit Hilfe des sichtbaren Laserlichts, wobei besonders vorteilhaft die Messkamera 80 bereits als Sensor bzw. Detektor für das reflektierte Laserlicht und für die Distanzmessung genutzt wird.

Eine erste Ausrichtung des Messgeräts 1 in horizontaler Richtung auf ein Zielobjekt kann manuell durch eine Drehung des Messkopfes 2 um die Basisachse 4 per Hand oder mittels eines Verstelldrehknopfes 54 geschehen, der entweder direkt oder mittels einer entsprechenden Motorisierung (nicht dargestellt) auf einen Verstellmechanismus einwirkt. In analoger Weise kann für die Ausrichtung auf ein Zielobjekt die Strahlumlenkeinheit 10 mit dem Umlenkelement 22 mittels eines zweiten Verstelldrehknopfes 56 manuell oder motorgetrieben um die Rotationsachse 11 verdreht werden. Die Messstrahlung 13 kann somit sowohl manuell als auch automatisch gesteuert mittels der mit den jeweiligen Antriebswellen verbundenen Motoren sehr genau auf ein Ziel ausgerichtet werden. Ein Bedienfeld 50 ist in diesem Beispiel für manuelle Eingaben am Gerät vorgesehen und ermöglicht das Ändern von Einstellungen für das Anvisieren eines Zieles bzw. das Ausrichten des Vermessungsgeräts 1 und/oder das Eingeben oder Ändern von Einstellungen für die Aufnahme von photographischen Bildern mit Hilfe der integrierten Messkamera 80 und/oder kann der Eingabe von zusätzlichen Daten dienen.

Des Weiteren weist das Vermessungsgerät 1 beispielhaft einen Griff 58 für einen einfachen Transport des Geräts 1 auf, welcher modular vom Messkopf 2 abnehmbar ist. Für Messungen oder für die Aufnahme von photographischen Bildern kann der Griff 58 abgenommenem werden, um einen möglichst grossen Scanbereich erfassen zu können.

In der beispielhaften Ausführungsform gemäss Figur 1 weist der Messkopf 2 des Vermessungsgeräts 1 ausserdem einen Neigungssensor 44 zur Vermessung einer Neigung des Vermessungsgeräts 1 bzw. des Messkopfs 2 relativ zum Gravitationsvektor auf.

Figur 3 zeigt eine zu dem Ausführungsbeispiel gemäss Figur 2 ähnliche Ausgestaltung einer erfindungsgemässen Strahlumlenkeinheit 10, wobei der Rotationskörper 20 in diesem Beispiel statt aus massivem Metall aus einer relativ leichten, mit Ausnehmungen versehenen Kunststoffstruktur (Leichtbauweise) besteht. Auf dem freien, abgeschrägten Ende des Rotationskörpers 20 ist als Umlenkelement 22 (vorzugsweise unter einem Neigungswinkel von 45° zu den beiden Achsen 4 und 11) in diesem Beispiel ein dichroitischer Glass- oder Kunststoffspiegel angeordnet, der über eine Klebeverbindung 24 mit der Stirnfläche 20' des Rotationskörpers 20 fest verbunden ist. Teile einer sich durch die Kunststoffstruktur ergebenden Zylinderwand 30 des Rotationskörpers 20 sind über Stützstreben 35 mit dem inneren, zentralen Teil des Rotationskörpers 20, der die Welle 12 aufnimmt, verbunden, wodurch sich Ausnehmungen im Rotationskörper 20 ergeben, die über ein dem freien Ende 20' des Rotationskörpers 20 gegenüberliegenden Ende zugänglich sind. In eine dieser Ausnehmungen 46 ist in diesem Beispiel über den beschriebenen Zugang eine Messkamera 80 eingesetzt. Über eine radiale Öffnung 83 ist das Sichtfeld 81 der Messkamera 80 koaxial und in gleicher Richtung zur Messstrahlung des Scanners in die Umgebung gerichtet. Die Leichtbaukonstruktion ist so berechnet und ausgestaltet, dass Unwucht, die durch die Kamera verursacht würde bereits durch die Leichtbaukonstruktion ausgeglichen wird.

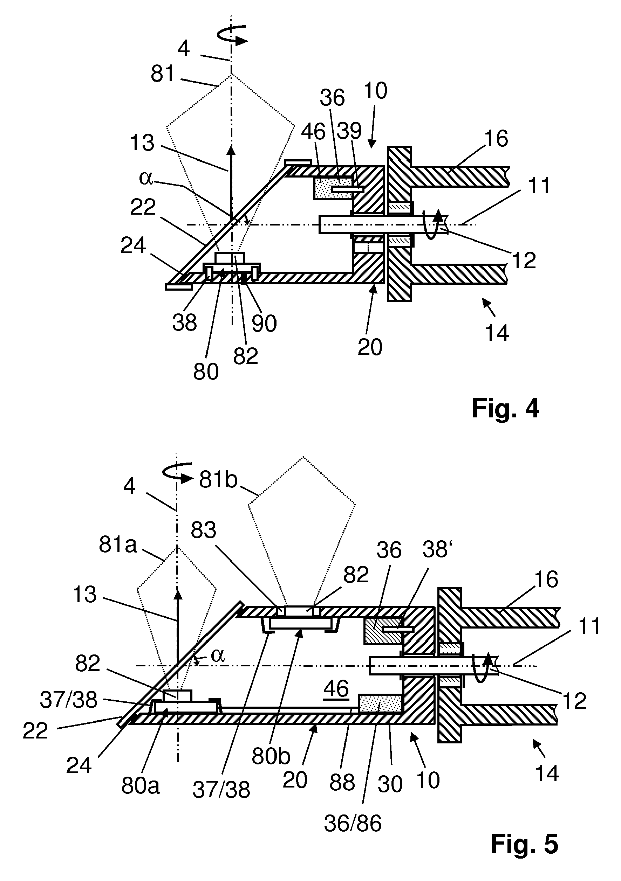

Die Strahlumlenkeinheit 10 der Ausführungsform dargestellt in Figur 4 unterscheidet sich von der Ausführungsform gemäss Figur 2 und 3 insbesondere dadurch, dass der Rotationskörper 20 als ein fast vollständig hohler, auf einer Seite abgeschrägter Zylinder ausgebildet ist, und zwar vorzugsweise aus einem leichten Metall wie Aluminium. Ein von dem Zylinder umfasster Hohlraum 46 erstreckt sich bis zum freien, abgeschrägten Ende 20' des Rotationskörpers 20, wobei der dichriotische Strahlteiler als Umlenkelement 22 bei dieser Ausgestaltungsform durch Klebeverbindungen 24 nur an den Stirnflächen der Zylinderwand 30 mit dem Rotationskörper 20 verbunden ist. Die Kamera 80 ist mit ihrem Objektiv 82 hinter dem dichroitischen Strahlteiler 22 im Hohlraum 46 des Zylinders angeordnet und zwar mit dem Objektiv 82 und somit dem Sichtfeld 81 wiederum koaxial in gleicher Richtung mit dem am Strahlteiler in die Umgebung umgelenkten Messstrahl 13.

Die Ausführungsform, dargestellt in Fig. 5 entspricht im Wesentlichen derjenigen aus Fig. 4, nur dass neben der Kamera 80a hinter dem dichroitischen Strahlteiler eine weitere Kamera 80b vorhanden ist, deren Sichtfeld 81b mit seitlichem Versatz in die gleiche Richtung ausgerichtet ist wie die Messstrahlung 13. Die Messkamera 80a kann dabei beispielsweise als Kamera für Nahfeldaufnahmen und die Messkamera 80b beispielsweise als Kamera für Fernfeldaufnahmen ausgebildet sein. Die Zylinderwand 30 enthält eine radiale Öffnung 83 (auch als Fenster bezeichnet) für die Aufnahme der weiteren Kamera 80b und die Ausrichtung ihres Sichtfeldes 81b. Die Kameras 80a, 80b sind mittels Halteelementen 38 an der Zylinderwand 30 des Rotationskörpers 20 passgenau befestigt. Ebenfalls im Hohlraum 46 des Rotationskörpers mittels Befestigungselementen 38 an der Zylinderwand 30 befestigt, befindet sich eine aufladbare Stromquelle 86 im Rotationskörper 20, die über eine Stromleitung 88 mit der Messkamera 80a8' verbunden ist. Die Stromquelle/Batterie 86 kann optional zugleich als Auswuchtelement 36 dienen. Neben der Stromquelle 86 oder statt dieser, können noch weitere Auswuchtelemente 36 ebenfalls mit Hilfe von Befestigungselementen 38' im Hohlraum 46 befestigt sein. Die Montage der Kameras 80a, 80b, der Stromquelle 86 und Auswuchtelemente 36 etc. erfolgt vor der Montage des Umlenkelementes 22 vom freien Ende 20' des Rotationskörpers 20 her, vorzugsweise beim Hersteller des Rotationskörpers 20.

Bis auf die Auswuchtelemente 36 und die Batterie 86, die beispielhaft mit Haltelementen 38' an der Zylinderwand 30 befestigt ist, ist der Innenraum zwischen dem Umlenkelement 22, der Zylinderwand 30 und dem Zylinderboden des Rotationskörpers 20 gemäss dieser dargestellten Ausführungsform leer, wodurch das Gewicht der Umlenkeinheit 10 sehr gering ist.

In einer nicht dargestellten Ausführungsform sind zwei radiale Öffnungen 83 in der Zylinderwand 30 vorgesehen, durch welche das Sichtfeld 81a, 81b der beiden Kameras 80a, 80b mit Versatz in die gleiche Richtung wie der Messtrahl 13 in die Umgebung gerichtet ist. In diesem Fall sind die Öffnungen 83 so gross gestaltet, dass die kleinen leichten Kameras, durch diese Öffnungen 83 hindurch montiert werden können. Beide Messkameras 80a, 80b sind in diesem Beispiel durch Kamerahalter 37 an der Zylinderwand 30 befestigt, die in Form von Halteklammern 37' ausgestaltet sind. Die offenbarten Halteklammern 37' erlauben, falls nötig z.B. bei Defekt einer Kamera oder wenn die Anforderungen die Verwendung einer anderen Kamera erforderlich machen, das Austauschen einer Kamera. Zwecks Variabilität der Aufnahmedistanz weist mindestens eine der beiden Messkameras in der oben beschriebenen Ausführungsform oder in der in Fig. 5 beschriebenen Ausführungsform einen - insbesondere digitalen - Zoom auf. Natürlich kann auch jede der beiden Messkameras 80a und 80b für ihren Aufnahme-Entfernungsbereich mit einem digitalen oder miniaturisierten, mechanischen Zoom ausgestattet sein. Bei den beiden Messkameras 80a und 80b kann es sich auch um Kameras mit unterschiedlichen Aufnahmegeschwindigkeiten, beispielsweise um eine Kamera einer durchschnittlichen Aufnahmegeschwindigkeit handeln, während die andere Kamera als eine Hochgeschwindigkeitskamera, zur Aufnahme von beispielsweise mehr als 500 Bildern pro Sekunde, ausgebildet ist oder die eine Messkamera 80a ist eine "normale" CC-Kamera während die andere Messkamera 80b eine Wärmebildkamera oder eine plenoptische Kamera ist.

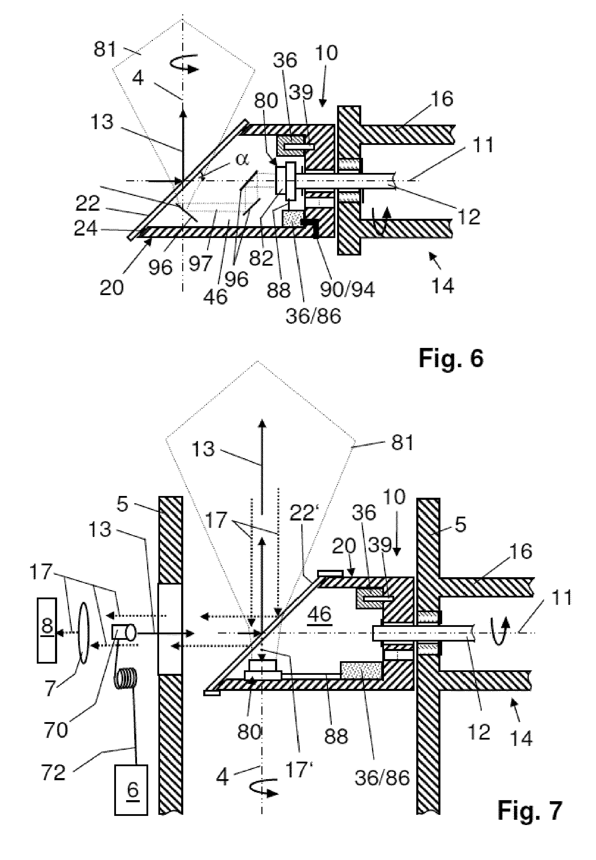

In der in Figur 6 gezeigten Ausführungsform ist der Rotationskörper 20 wieder als Hohlkörper ausgebildet. Das Strahlumlenkelement 22 ist wiederum teilweise reflektierend und teilweise transmittierend ausgebildet. Dazu eignen sich grundsätzlich Strahlteiler, welche auf die optische Umlenkfläche auftreffendes Licht in einem vorbestimmten Verhältnis aufspalten in Transmissions- und Reflexionslicht, beispielsweise auch weitgehend unabhängig von der Wellenlänge des eintreffenden Lichts. Bevorzugt ist aber, dass für diese Ausführungsform das Strahlumlenkelement als ein dichroischer Spiegel 22 ausgebildet ist, der nur Licht der Wellenlänge der Messstrahlung 13 umlenkt und für Licht anderer Wellenlängen transmittierend ist.

Die Messkamera 80 ist in diesem Beispiel axial zur Rotationsachse 11 im Rotationskörper 20 angeordnet. Mittels im Hohlraum 46 angeordneten, optischen Umlenkelementen 96 wird der Strahlengang 97 des Sichtfelds 81 des axial ausgerichteten Objektives 82 der Kamera 80 koaxial hinter den Strahlteiler 22 und durch diesen hindurch in die gleiche Richtung gelenkt wie die am Strahlteiler 22 in die Umgebung umgelenkte Messstrahlung 13. Die Messkamera 80 kann dabei entweder direkt mit der Welle 12 oder mit dem Rotationskörper 20 fix verbunden sein, so dass sie mit der Rotationsachse 11 mitdreht. Der durch den als Hohlkörper ausgebildeten Rotationskörper 20 in axialer Richtung zur Verfügung stehende Bauraum erhöht die Flexibilität bezüglich der gewünschten Kamera/Kameraoptik, da bei höherem Platzbedarf die Länge des Rotationskörpers 20 innerhalb eines gewissen Spielraums angepasst werden kann, wohingegen eine Anpassung des Durchmessers des Rotationskörpers 20 viel schwieriger und aufwändiger wäre. Auch ist an dieser Position die Kamera leichter bezüglich Energieversorgung und/oder Datentransfer mit den Räumen ausserhalb des Rotationskörpers verbindbar, beispielsweise via Durchführung in der Welle 12 oder Schleifkontakt.

In den Figuren 7 und 8 und 9 sind Varianten einer weiteren vorteilhaften Ausführungsform des erfindungsgemässen Vermessungsgeräts 1 dargestellt. Bei diesen Varianten emittiert die Strahlungsquelle 6 InfraRot-Laserlicht (IR-Laserlicht), welches über eine lichtleitende Faser 72 an einen Kollimator 70 geleitet wird. Bei der Durchleitung des IR-Laserlichtes durch die Faser 72 wird das Laserlicht durchmischt, so dass die ausgesandte Messstrahlung 13 schliesslich neben dem IR-Laserlicht auch einen gewissen Weisslichtanteil (zwischen 5% und 20%) enthält. Die Messstrahlung 13 inklusive des Weisslichtanteils wird reflektiert und vom Vermessungsgerät als Reflexionsstrahlung 17 eingefangen. Der reflektierte IR-Laserlichtanteil 17 wird im Vermessungsgerät zur Distanzbestimmung auf den Detektor 8 im Gehäuse 5 geleitet während der reflektierte Weisslichtanteil 17' von der Messkamera 80 erfasst und z.B. für ein Anzielen eines gewünschten Zielpunktes und/oder für eine Farbbestimmung der das Weisslicht 17' reflektierenden Oberfläche genutzt wird.

Die Varianten der Figuren 7, 8, 9 unterscheiden sich dadurch voneinander, dass in der Variante der Figur 7 die Strahlungsquelle 6 und der zugehörige Kollimator 70 in üblicher Weise im Gehäuse 5 des Messkopfes 2 des Vermessungsgerätes 1 angeordnet sind. Die Messkamera 80 ist analog zu dem Beispiel aus der Figur 4 im Rotationskörper 20 angeordnet. Sie ist mit ihrem Sichtfeld 81 also konzentrisch ohne Versatz in Richtung der in die Umgebung ausgesandten Messstrahlung 13 ausgerichtet.

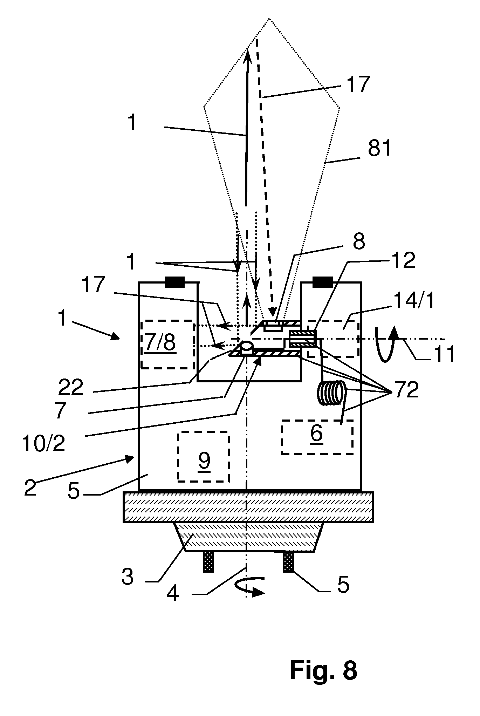

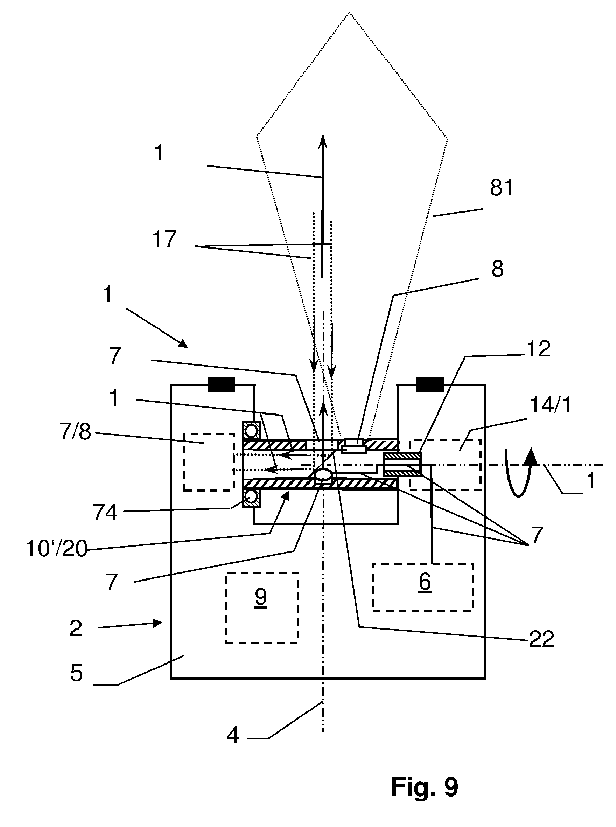

Auch in den beiden Varianten der Figuren 8 und 9 ist die Strahlungsquelle 6 im Gehäuse 5 angeordnet, aber im Gegensatz zur Ausführungsform der Figur 7 ist bei den Varianten der Figuren 8 und 9 der Kollimator 70 im Rotationskörper 20, 20' der Strahlumlenkeinheit 10, 10' angeordnet. Die Faser 72, welche die Strahlungsquelle 6 mit dem Kollimator 70 verbindet, ist in den hier gezeigten Beispielen durch eine durchgehende Öffnung der den Rotationskörper 10, 10' in seiner Rotation antreibenden Welle 12' hindurchgeführt und im Rotationskörper 20, 20' zum Kollimator 70 geführt. Der Rotationskörper 20, 20' weist hierfür einen entsprechenden Kanal auf (nicht dargestellt) oder ist, wie in diesen Beispielen dargestellt, als Hohlzylinder ausgebildet. Um die Rotation auszugleichen ist die Faser 72 mit einer oder mehreren (je nach Bedarf) Rotationskupplungen ausgestattet (nicht dargestellt). Der Kollimator 70 ist jeweils auf der Rückseite eines Umlenkelements 22, 22' angeordnet, das entweder als dichroischer Spiegel 22 (vgl. Fig. 7) ausgebildet ist oder als Spiegel 22' mit einer zumindest für die Messstrahlung 13 inklusive Weisslicht transparenten Öffnung über dem Kollimator 70 (vgl. Fig. 8), so dass die Messstrahlung 13 ohne weiteres mittels der Strahlumlenkeinheit 10, 10' gerichtet in die Umgebung ausgesendet werden und die eingefangene Reflexionsstrahlung 17 wie in den anderen Beispielen auch über das Umlenkelement 22' und entsprechende optische Elemente 7 zum Detektor 8 im Gehäuse 5 des Vermessungsgerätes 1 weitergeleitet werden kann.

Im Gegensatz zu der Variante aus Figur 7 ist die Messkamera 80 in den Varianten der Beispiele 8 und 9 derart im Rotationskörper 20, 20' angeordnet, dass ihr Sichtfeld mit einem wohl definierten, bekannten seitlichen Versatz aber ebenfalls ohne Verdrehung bzw. einer Verdrehung von 0° gegenüber der Messstrahlung 13 ausgereichtet ist.

Die beiden Ausführungsformen der Figuren 8 und 9 unterscheiden sich dadurch voneinander, dass der Rotationskörper 20 der Strahlumlenkeinheit 10 in Figur 8, wie üblich einseitig von der den Rotationskörper 20 in seiner Rotation antreibenden Welle 12' abgestützt ist, während die gegenüberliegende Seite des Rotationskörpers 20 ein freies Ende bildet, dass in üblicher weise abgeschrägt ist und das Umlenkelement 22 trägt. Im Gegensatz dazu ist der Rotationskörper 20' im Beispiel der Figur 11 als durchgehender Hohlzylinder ausgebildet, der auf seiner einen Seite wiederum von der antreibenden Welle 12' getragen ist, auf der gegenüberliegenden Seite aber über ein Kugellager 74 im Gehäuse 5 des Messkopfes 2 des Vermessungsgerätes 1 drehbar gelagert ist. Auf diese Weise lassen sich Messfehler, die sich durch Deformationen bzw. Biegemomente des Rotationskörpers ergeben, weitgehend vermeiden. Etwa in der Mitte des Rotationskörper 20' ist eine Öffnung 78 in den Hohlzylinder eingebracht und darunter in entsprechender Winkellage zur Rotationsachse ein Umlenkelement 22. Die Öffnung 78 erlaubt zusammen mit dem Umlenkelement 22 das Austreten der Messstrahlung 13 und das Einfangen der Reflexionsstrahlung 17 (angedeutet mit gepunkteten Linien). Der Hohlraum des Rotationskörpers 20' auf jener mittels Kugellager 74 abgestützten Seite dient der Reflexionsstrahlung 17 als Pfad vom Umlenkelement 22 hin zum Detektor 8 im Gehäuse 5. Es versteht sich, dass das Gehäuse eine entsprechende Öffnung aufweisen muss, die dann vorzugsweise auch das Kugellager aufnehmen kann. Alternativ hierzu kann auch der photosensitive Sensor der Kamera so ausgebildet sein, dass er die Messstrahlung detektieren kann, so dass die Kamera neben ihrer Aufgabe photographische Bilder zu generieren zugleich auch als Detektor Bestandteil der Distanzmessvorrichtung ist. Die Distanzmessung kann dann z.B. vorteilhaft nach dem Triangulationsmessprinzip erfolgen (vgl. gestrichelte Linie 17b) .

Die in Figur 10 dargestellte Ausführungsform weist ebenfalls einen durchgehenden Rotationskörper 20' auf, der auf einer Seite von der angetriebenen Welle 12 gestützt und auf der gegenüberliegenden Seite mittels Kugellager 74 im Gehäuse 5 drehbar gelagert ist. Auch sonst ist diese Ausführungsform im Prinzip gleich aufgebaut wie das Beispiel aus Figur 9. Im Gegensatz zur Ausführungsform der Figur 9 ist hier aber die Strahlungsquelle 6, welche die Messstrahlung 13 aussendet, in üblicher Weise im Gehäuse 5 des Messkopfes angeordnet, wie dies auch für die Beispiele der Figuren 2 bis 8 beschreiben ist. Neben dieser Strahlungsquelle 6 für die Messstrahlung 13 im Gehäuse 5 ist bei dieser Ausführungsform noch eine separate Laserlichtquelle 76 im Rotationskörper 10' vorgesehen, welche für die Messkamera 80 sichtbares Laserlicht 77 aussendet. Diese Laserlichtquelle 76 ist analog dem Kollimator 70 in Figur 9 angeordnet, wobei ebenfalls analog zur Ausführungsform der Figur 9 das Umlenkelement 22 als dichroitischer Spiegel ausgestaltet ist. Die Messkamera 80 ist wiederum im Rotationskörper 20' so angeordnet, dass ihr Sichtfeld 81 mit seitlichem Versatz in Richtung der ausgesandten Messstrahlung 13 ausgerichtet ist, so dass das für die Messkamera 80 sichtbare Laserlicht 77 der Laserlichtquelle 76 in ihrem Sichtfeld 81 liegt. Eine Öffnung 78 im Rotationskörper erlaubt wiederum das Einfangen der Reflexionsstrahlung 17 und das Austreten der am Umlenkelement 22 umgelenkten Messstrahlung 13. Der Hohlraum des Rotationskörpers auf jener mittels Kugellager 74 abgestützten Seite dient der Messstrahlung und der Reflexionsstrahlung als Pfad zum Umlenkelement 22 hin bzw. von diesem weg.

Es ergibt sich für den Fachmann ohne weiteres, dass nicht nur die in den Figuren 9 und 10 gezeigten Ausführungsformen einen durchgehenden Rotationskörper 20' aufweisen können, sondern diese Bauform auch für viele weitere Ausführungsform sinnvoll eingesetzt werden kann; beispielsweise auch für jene Ausführungsformen aus den Figuren 3 bis 8.

Wie aus der obigen Beschreibung ersichtlich sind somit besondere Vorteile des erfindungsgemässen Messgerätes der einfachere und robustere Aufbau; die nun möglichen Punktmessungen, das punktuellen Anvisieren von Zielen bzw. aussenden eines markierenden Laserstrahls im für die Messkamera sichtbaren Lichtbereich, der mit der Messkamera verfolgbar ist, und das dadurch ermöglichte vereinfachte Anzielen und Markieren von gewünschten Punkten bei gleichzeitiger Distanzmessung; Realtime-Anwendungen, die im Vergleich zu Theodoliten aufgrund der geringen Masse der mit der Messkamera versehenen Strahlumlenkeinheit und der daraus resultierenden schnellen Nachführbarkeit der Messkamera möglich sind und die Nutzung der Messkamera als Aufnahmegerät für Filme/Videoclips oder als Sucher/Tracker erlaubt; das einfache Verfolgen und Auffinden von Zielen bei vorgegebenen Zielkoordinaten bzw. mit Hilfe von Bilderkennung und die Steuerung via Smartphone, Tablet PC Joystick etc.; die einfachere und genauere 2-Lagen-Messung, die eine präzisere Kalibrierung der Messkamera und des Laserstrahls ermöglicht sowie Anschlussmessungen die eine freie Stationierung des Vermessungsgerätes erlauben.

Der Fachmann weiss, in welcher Weise Details der vorangehend beschriebenen Ausführungsformen und Anwendungen der Erfindung im Rahmen der Ansprüche miteinander kombinierbar sind, auch wenn hier aus Platzgründen nicht alle Kombinationen dargestellt werden konnten.

## Patentansprüche

1. Vermessungsgerät (1, 2), insbesondere Scanner, zum optischen Vermessen einer Umgebung durch scannendes Aussenden von Messstrahlung (13), mit
• einem auf einer Basis (3) um eine Basisachse (4) drehbar gelagerten Gehäuse (5),
• einer im Gehäuse (5) untergebrachten Strahlungsquelle (6) zur Erzeugung der Messstrahlung (13),
• einer im Gehäuse (5) untergebrachten Strahlenoptik (7) für ein Ausleiten der Messstrahlung (13) aus dem Gehäuse (5) und einem Weiterleiten von aus der Umgebung von einem gescannten Objekt reflektierter Reflexionsstrahlung (17) auf einen im Gehäuse (5) befindlichen Detektor (8), wobei Messstrahlung (13) und Reflexionsstrahlung (17) wenigstens teilweise einen gemeinsamen optischen Pfad haben;
• einer im gemeinsamen optischen Pfad gelegenen und im Gehäuse (5) drehbar um eine Rotationsachse (11) gelagerten Strahlumlenkeinheit (10) zur einstellbaren, gerichteten Aussendung der Messstrahlung (13) in die Umgebung und zum Einfangen der Reflexionsstrahlung (17) aus der Umgebung;
• mit einer in einen Rotationskörper (20) der Strahlumlenkeinheit (10) integrierten, und bei einer Rotationsbewegung der Strahlumlenkeinheit (10) um ihre Rotationsachse (11) mit der Strahlumlenkeinheit (10) mitrotierenden Messkamera (80, 80a, 80b, 80c) zur Aufnahme photographischer Bilder von der zu scannenden oder gescannten Umgebung;
• mit einer Verarbeitungs- und Steuerungseinheit (9) zur Daten- und Bildverarbeitung und zur Steuerung des Vermessungsgeräts (1, 2),
**dadurch gekennzeichnet, dass**
• die Messkamera (80c), welche ein Sichtfeld (81c) besitzt, derart ausgerüstet und in der Rotationseinheit angeordnet ist, dass ihr Sichtfeld (81c) in die gleiche Richtung ausgerichtet ist wie die durch ein Strahlumlenkelement (22) der Strahlumlenkeinheit (10) in die Umgebung ausgesandte Messstrahlung (13)

2. Vermessungsgerät (1,2) nach Anspruch 1,
**dadurch gekennzeichnet, dass**
das Sichtfeld (81c) der Messkamera (80c) mit seitlichem Versatz in die gleiche Richtung ausgerichtet ist wie die durch das Strahlumlenkelement (22) der Strahlumlenkeinheit (10) in die Umgebung ausgesandte Messstrahlung (13).

3. Vermessungsgerät (1, 2) nach Anspruch 1,
**dadurch gekennzeichnet, dass**
die Messkamera (80c) im Rotationskörper (20) auf der Rückseite des Strahlumlenkelements (22) angeordnet ist und das Strahlumlenkelement (22) als dichroitischer Strahlteiler ausgebildet ist, der im Wesentlichen nur die Wellenlänge der Messstrahlung (13) umlenkt und für andere Wellenlängen transparent ist und wobei das Sichtfeld (81c) der Messkamera (80c) entweder mit leichtem seitlichen Versatz oder koaxial in die gleiche Richtung ausgerichtet ist wie die durch das Strahlumlenkelement (22) der Strahlumlenkeinheit (10) in die Umgebung ausgesandte Messstrahlung (13).

4. Vermessungsgerät (1,2) nach einem der vorangegangenen Ansprüche,
**dadurch gekennzeichnet, dass**
eine Laserlichtquelle vorgesehen ist, die ein für die Messkamera (80, 80a, 80b, 80c) sichtbares Laserlicht generiert, wobei das Laserlicht dieser Laserlichtquelle derart in die Richtung des Sichtfeldes (81, 81a, 81b, 81c) der Messkamera (80, 80a, 80b, 80c) ausgerichtet in die Umgebung aussendbar ist, dass das sichtbare Laserlicht von der Messkamera (80, 80a, 80b, 80c) verfolgbar ist.

5. Vermessungsgerät (1, 2) nach Anspruch 4,
**dadurch gekennzeichnet, dass**
die Laserlichtquelle, welche für die Messkamera (80, 80a, 80b, 80c) sichtbares Laserlicht generiert, Teil einer Distanzmessvorrichtung ist, welche die Bestimmung der Distanz zwischen dem Vermessungsgerät (1, 2) und einem das sichtbare Laserlicht reflektierenden Objekt erlaubt und die Messkamera als Sensor der Distanzmessvorrichtung für die Lichtdistanzmessung mittels des für die Messkamera (80, 80a, 80b, 80c) sichtbaren Laserlichts dient.

6. Vermessungsgerät (1, 2) nach Anspruch 5,
**dadurch gekennzeichnet, dass**
die Distanzmessvorrichtung eine auf dem Triangulationsprinzip basierende Distanzmessvorrichtung ist.

7. Vermessungsgerät (1, 2) nach Anspruch 5,
**dadurch gekennzeichnet, dass**
die Distanzmessvorrichtung eine auf dem Laufzeitprinzip oder der Phasenverschiebung basierende Distanzmessvorrichtung ist und die Messkamera insbesondere eine elektronische Distanzmesseinheit, EDM, Kamera ist.

8. Messverfahren durchzuführen mit einem Vermessungsgerät (1, 2) gemäss einem der Ansprüche 1 bis 7, bei dem eine Umgebung durch scannendes Aussenden von Messstrahlung (13) optisch vermessen wird (Vermessungsscan),
**dadurch gekennzeichnet, dass**
eine Ausrichtung des Vermessungsgerätes (1, 2) unter Verwendung eines Einzelpunktmessmodus erfolgt, wobei im Einzelpunktmessmodus
• ein Zielpunkt mit Hilfe der Messkamera (80, 80a, 80b, 80c) anvisiert wird,
• Winkelkoordinaten des Zielpunktes automatisch erfasst werden und
• gleichzeitig mittels der in die gleiche Richtung wie das Sichtfeld (81) der Messkamera (80, 80a, 80b, 80c) ausgerichteten Messstrahlung (13) automatisch die Entfernung zum Zielpunkt bestimmt wird
• und eine automatische Ableitung der Raum-Koordinaten des Zielpunkts aus diesen Daten, nämlich den Winkelkoordinaten und der Entfernung, erfolgt.

9. Messverfahren nach Anspruch 8,
**dadurch gekennzeichnet, dass**
vor dem optischen Vermessen der Umgebung mittels der jeweils in Richtung der ausgesandten Messstrahlung blickenden Messkamera (80, 80a, 80b, 80c) eine 2-Lagen-Messung durchgeführt wird und mittels der 2-Lagen-Messung automatisiert Fehler der Messkamera in der Horizotalkollimation und im Vertikalindex bestimmt werden und optional auch eine automatisierte Bestimmung der Rotationsachsschiefedurchgeführt wird und die Messkamera (80, 80a, 80b, 80c) zum Achssystem des Messinstrumentes kalibriert wird und ausserdem optional mit der bereits kalibrierten Messkamera (80, 80a, 80b, 80c) die Lage des Laserstrahls der Scaneinheit in Bezug zum Achssystem kalibriert wird.

10. Messverfahren nach Anspruch 8 oder 9
**dadurch gekennzeichnet, dass**
vor dem optischen Vermessen der Umgebung eine Einmessung des Vermessungsgeräts (1, 2) in ein übergeordnetes System erfolgt, wobei ein oder mehr Referenz-Zielpunkte des übergeordneten Systems mit Hilfe der in den Rotationskörper (20) des Vermessungsgerätes (1, 2) integrierten und in die gleiche Richtung wie die ausgesandte Messstrahlung blickenden Messkamera (80, 80a, 80b, 80c) anvisiert und zugleich deren Raum-Koordinaten (Winkelkoordinaten und Distanz) bestimmt werden.

11. Messverfahren nach einem der Ansprüche 8 bis 10,
**dadurch gekennzeichnet, dass**
eine Laserlichtquelle für das Aussenden von für die Messkamera (80, 80a, 80b, 80c) sichtbaren Laserlichts vorhanden ist und dieses in Richtung eines Zielpunktes ausgesandt und der Zielpunkt mittels des reflektierten Laserlichtes kenntlich gemacht wird, wobei der Zielpunkt ortsfest oder beweglich sein kann und wobei
• das Anvisieren und Markieren des Zielpunktes mit dem sichtbaren Laserlicht von der Messkamera (80, 80a, 80b, 80c) verfolgt wird, die Messkamera mit dem durch das Laserlicht markierten Zielpunkt in Deckung gebracht wird
• und die Winkel-Koordinaten des Zielpunkts erfasst werden, und/oder
• die Laserlichtquelle, welche das für die Messkamera sichtbare Licht ausstrahlt mit einer Distanzmesseinheit derart verbunden ist, dass eine Distanz zum Zielpunkt aufgrund des vom Zielpunkt reflektierten und von der Distanzmesseinrichtung erfassten sichtbaren Laserlichts bestimmt wird, wobei die Messkamera (80, 80a, 80b, 80c) als Sensor der Distanzmessvorrichtung für die Lichtdistanzmessung dient.

12. Messverfahren nach einem der Ansprüche 8 bis 11,
**dadurch gekennzeichnet, dass**
anschliessend an einen der Verfahrensschritte der Ansprüche 8 bis 11
• mit Hilfe der Messkamera (80, 80a, 80b) von einem Benutzer genügend viele einzelne Punkte einer Umgebung bzw. eines Objekts anvisiert und deren Winkelkoordinaten erfasst werden, so dass durch diese Punkte eine Projektionsfläche eines Raumes definierbar ist, und
• dass der Raum, welcher der auf diese Weise definierten Projektionsfläche entspricht, anschliessend durch einen Vermessungsscan vermessen wird.

13. Messverfahren nach einem der Ansprüche 8 bis 12 ,
**dadurch gekennzeichnet, dass**
während des Vermessungsscans photographische Bilder von der Messkamera (80, 80a, 80b, 80c) aufgenommen werden, wobei die Aufnahmegeschwindigkeit, mit der Bilder aufgenommen werden, so abgestimmt ist auf das Sichtfeld (81, 81a, 81b, 81c) der Messkamera (80, 80a, 80b, 80c) und die Rotationsgeschwindigkeit der Strahlumlenkeinheit (10) um die Rotationsachse (11) und/oder die Drehgeschwindigkeit des Gehäuses (5) um die Basisachse (4), dass bei einem Aneinanderfügen der aufgenommenen Bilder ein Panoramabild entsteht, wobei als Messkamera (80, 80a, 80b, 80c) insbesondere eine Range Imaging, RIM, Zeilenkamera verwendet wird.

14. Messverfahren nach einem der Ansprüche 8 bis 11 ,
**dadurch gekennzeichnet, dass**
das Vermessungsgerät (1, 2) über eine Übertragungseinheit (90) für den Empfang und die Übermittlung von Daten sowie über eine Bildverarbeitungssoftware mit Muster- bzw. Bilderkennung verfügt, und für die Ausrichtung des Vermessungsgeräts (1, 2)
• der Messkamera (80, 80a, 80b, 80c) ein Erkennungsmuster eines gesuchten Objekts übermittelt wird, das Erkennungsmuster des Objekts durch die Bildverarbeitungssoftware als Referenz erfasst und abgespeichert wird
• mittels Rotation der Messkamera (80, 80a, 80b, 80c) um die Rotationsachse (11) und Drehung um die Basisachse (4) und mit Hilfe der Bildverarbeitungssoftware und des als Referenz durch die Bildverarbeitungssoftware abgespeicherten Erkennungsmusters die Umgebung nach dem gesuchten Objekt abgesucht wird und, wenn das gesuchte Objekt gefunden wurde, über eine Erfassung der Distanz und der Winkelkoordinaten die Raum-Koordinaten des gesuchten Objekts generiert und für den Benutzer ausgegeben werden.

15. Messverfahren nach einem der Ansprüche 8 bis 11,
**dadurch gekennzeichnet, dass**
das Vermessungsgerät (1, 2) über eine Übertragungseinheit (90) für den Empfang und die Übermittlung von Daten sowie über eine Bildverarbeitungssoftware verfügt, und für die Ausrichtung des Vermessungsgeräts (1, 2)
• dem Vermessungsgerät (1, 2) Koordinaten eines gesuchten Ziels übermittelt und von diesem gespeichert werden, wobei das Ziel ein Zielort, das heisst ein ortsfestes Ziel, oder eine durch ihre zeitlich zu Zeitpunkten t1 bis ti aufeinanderfolgenden Raumkoordinaten definierte Bewegungsbahn ist;
• mittels der Messkamera (80, 80a, 80b, 80c) ein zu verfolgendes Zielobjekt als Zielpunkt anvisiert, photographiert und die photographische Aufnahme mittels der Bildverarbeitungssoftware als Referenzbild für die Erkennung und Verfolgung des Zielobjekts mittels Messkamera abspeichert wird;
• die Ist-Koordinaten des zu verfolgenden Zielobjektes bestimmt werden und mit den Koordinaten des gesuchten Ziels (Zielort bzw. Raumkoordinaten der Bewegungsbahn) verglichen werden und daraus abgeleitet eine Bewegungsanweisung generiert und ausgegeben wird, mit deren Hilfe das zu verfolgende Zielobjekt in Richtung des Ziels gelenkt wird, wobei die Messkamera (80, 80a, 80b, 80c) mit Hilfe der Bildverarbeitungssoftware und dem Referenzbild ihr zu verfolgendes Zielobjekt erkennt und dessen Bewegung verfolgt, und wobei die Ist-Koordinaten des zu verfolgenden Zielobjekts laufend erfasst und mit den Koordinaten des Ziels verglichen werden und die Bewegungsanweisung entsprechend angepasst werden, und
• dass bei Übereinstimmung der Ist-Koordinaten des zu verfolgenden Zielobjekts mit den Koordinaten des Ziels eine Erfolgsmeldung ausgegeben wird.

## Claims

1. Surveying apparatus (1, 2), in particular scanner, for optically surveying an environment by scanning emission of measurement radiation (13), comprising
• a housing (5) mounted on a base (3) rotatably about a base axis (4),
• a radiation source (6) accommodated in the housing (5) and serving for generating the measurement radiation (13),
• a beam optical unit (7) accommodated in the housing (5) and serving for guiding the measurement radiation (13) out of the housing (5) and forwarding reflection radiation (17) reflected from the environment by a scanned object onto a detector (8) situated in the housing (5), wherein measurement radiation (13) and reflection radiation (17) at least partly have a common optical path;
• a beam deflection unit (10) located in the common optical path and mounted in the housing (5) rotatably about a rotation axis (11) and serving for the adjustable, directional emission of the measurement radiation (13) into the environment and for capturing the reflection radiation (17) from the environment;
• comprising a measuring camera (80, 80a, 80b, 80c) integrated into a rotation body (20) of the beam deflection unit (10) and concomitantly rotating with the beam deflection unit (10) upon a rotational movement of the beam deflection unit (10) about its rotation axis (11) and serving for capturing photographic images of the environment to be scanned or the scanned environment;
• comprising a processing and control unit (9) for data and image processing and for control of the surveying apparatus (1, 2),
**characterized in that**
• the measuring camera (80c), which has a field of view (81c), is equipped and arranged in the rotation unit in such a way that its field of view (81c) is aligned in the same direction as the measurement radiation (13) emitted into the environment by a beam deflection element (22) of the beam deflection unit (10).

2. Surveying apparatus (1,2) according to Claim 1,
**characterized in that**
the field of view (81c) of the measuring camera (80c) is aligned with a lateral offset in the same direction as the measurement radiation (13) emitted into the environment by the beam deflection element (22) of the beam deflection unit (10).

3. Surveying apparatus (1, 2) according to Claim 1,
**characterized in that**
the measuring camera (80c) is arranged in the rotation body (20) on the rear side of the beam deflection element (22) and the beam deflection element (22) is embodied as a dichroic beam splitter which deflects substantially only the wavelength of the measurement radiation (13) and is transparent to other wavelengths, and wherein the field of view (81c) of the measuring camera (80c) is aligned either with a slight lateral offset or coaxially in the same direction as the measurement radiation (13) emitted into the environment by the beam deflection element (22) of the beam deflection unit (10).

4. Surveying apparatus (1, 2) according to any one of the preceding claims,
**characterized in that**
a laser light source is provided, which generates laser light visible to the measuring camera (80, 80a, 80b, 80c), wherein the laser light of said laser light source is emittable into the environment in a manner aligned in the direction of the field of view (81, 81a, 81b, 81c) of the measuring camera (80, 80a, 80b, 80c) in such a way that the visible laser light is trackable by the measuring camera (80, 80a, 80b, 80c).

5. Surveying apparatus (1, 2) according to Claim 4,
**characterized in that**
the laser light source that generates laser light visible to the measuring camera (80, 80a, 80b, 80c) is part of a distance measuring device that allows the determination of the distance between the surveying apparatus (1, 2) and an object that reflects the visible laser light, and the measuring camera serves as a sensor of the distance measuring device for the light distance measurement by means of the laser light visible to the measuring camera (80, 80a, 80b, 80c).

6. Surveying apparatus (1, 2) according to Claim 5,
**characterized in that**
the distance measuring device is a distance measuring device based on the triangulation principle.

7. Surveying apparatus (1, 2) according to Claim 5,
**characterized in that**
the distance measuring device is a distance measuring device based on the time-of-flight principle or the phase shift, and the measuring camera is an electronic distance measuring unit, EDM camera, in particular.

8. Measuring method to be carried out with a surveying apparatus (1, 2) according to any one of Claims 1 to 7, wherein an environment is optically surveyed by scanning emission of measurement radiation (13) (surveying scan),
**characterized in that**
the surveying apparatus (1, 2) is aligned using an individual-point measuring mode, wherein in the individual-point measuring mode
• a target point is sighted with the aid of the measuring camera (80, 80a, 80b, 80c),
• angular coordinates of the target point are automatically acquired and
• simultaneously the distance to the target point is automatically determined by means of the measurement radiation (13) aligned in the same direction as the field of view (81) of the measuring camera (80, 80a, 80b, 80c)
• and the spatial coordinates of the target point are automatically derived from these data, namely the angular coordinates and the distance.

9. Measuring method according to Claim 8,
**characterized in that**
a two-position measurement is carried out before the optical surveying of the environment by means of the measuring camera (80, 80a, 80b, 80c) looking in each case in the direction of the emitted measurement radiation and errors of the measuring camera in the horizontal collimation and in the vertical index are determined in an automated manner by means of the two-position measurement and an automated determination of the rotation axis skew is optionally also carried out and the measuring camera (80, 80a, 80b, 80c) is calibrated with respect to the axial system of the measuring instrument and, in addition, the position of the laser beam of the scanning unit in relation to the axial system is optionally calibrated with the measuring camera (80, 80a, 80b, 80c) already calibrated.

10. Measuring method according to Claim 8 or 9,
**characterized in that**
the surveying apparatus (1, 2) is calibrated into a superordinate system before the optical surveying of the environment, wherein one or more reference target points of the superordinate system are sighted with the aid of the measuring camera (80, 80a, 80b, 80c) integrated into the rotation body (20) of the surveying apparatus (1, 2) and looking in the same direction as the emitted measurement radiation and their spatial coordinates (angular coordinates and distance) are determined at the same time.

11. Measuring method according to any one of Claims 8 to 10,
**characterized in that**
a laser light source for emitting laser light visible to the measuring camera (80, 80a, 80b, 80c) is present and said laser light is emitted in the direction of a target point and the target point is identified by means of the reflected laser light, wherein the target point can be stationary or movable and wherein
• the sighting and marking of the target point with the visible laser light is tracked by the measuring camera (80, 80a, 80b, 80c), the measuring camera is made to coincide with the target point marked by the laser light
• and the angular coordinates of the target point are acquired, and/or
• the laser light source that emits the light visible to the measuring camera is connected to a distance measuring unit in such a way that a distance to the target point is determined on the basis of the visible laser light reflected by the target point and acquired by the distance measuring unit, wherein the measuring camera (80, 80a, 80b, 80c) serves as a sensor of the distance measuring device for the light distance measurement.

12. Measuring method according to any one of Claims 8 to 11,
**characterized in that**
following one of the method steps in Claims 8 to 11
• with the aid of the measuring camera (80, 80a, 80b) a user sights a sufficient number of individual points of an environment or of an object and acquires their angular coordinates, such that a projection area of a space is definable by these points, and
• **in that** the space corresponding to the projection area defined in this way is subsequently surveyed by a surveying scan.

13. Measuring method according to any one of Claims 8 to 12,
**characterized in that**
during the surveying scan photographic images are captured by the measuring camera (80, 80a, 80b, 80c), wherein the capture speed at which images are captured is coordinated with the field of view (81, 81a, 81b, 81c) of the measuring camera (80, 80a, 80b, 80c) and the rotational speed of the beam deflection unit (10) about the rotation axis (11) and/or the rotational speed of the housing (5) about the base axis (4) such that a panoramic image arises when the captured images are joined together, wherein a range imaging RIM line camera, in particular, is used as the measuring camera (80, 80a, 80b, 80c).

14. Measuring method according to any one of Claims 8 to 11,
**characterized in that**
the surveying apparatus (1, 2) has a transmission unit (90) for receiving and communicating data and image processing software with pattern or image recognition, and for the alignment of the surveying apparatus (1, 2)
• a recognition pattern of an object sought is communicated to the measuring camera (80, 80a, 80b, 80c), the recognition pattern of the object is acquired by the image processing software as reference and is stored,
• by means of rotation of the measuring camera (80, 80a, 80b, 80c) about the rotation axis (11) and rotation about the base axis (4) and with the aid of the image processing software and the recognition pattern stored as reference by the image processing software, the environment is searched for the object sought and, if the object sought has been found, the spatial coordinates of the object sought are generated by means of an acquisition of the distance and of the angular coordinates and are output for the user.

15. Measuring method according to any one of Claims 8 to 11,
**characterized in that**
the surveying apparatus (1, 2) has a transmission unit (90) for receiving and communicating data and image processing software, and for the alignment of the surveying apparatus (1, 2)
• coordinates of a target sought are communicated to the surveying apparatus (1, 2) and are stored by the latter, wherein the target is a target location, that is to say a stationary target, or a movement path defined by its spatial coordinates succeeding one another temporally at instants t1 to ti;
• a target object to be tracked is sighted as a target point and photographed by means of the measuring camera (80, 80a, 80b, 80c) and the photograph is stored by means of the image processing software as a reference image for the recognition and tracking of the target object by means of the measuring camera;
• the actual coordinates of the target object to be tracked are determined and are compared with the coordinates of the target sought (target location or spatial coordinates of the movement path) and, in a manner derived therefrom, a movement instruction is generated and output, with the aid of which the target object to be tracked is directed in the direction of the target, wherein the measuring camera (80, 80a, 80b, 80c), with the aid of the image processing software and the reference image, recognizes its target object to be tracked and tracks the movement thereof, and wherein the actual coordinates of the target object to be tracked are constantly acquired and compared with the coordinates of the target and the movement instruction are correspondingly adapted, and
• **in that** in the case where the actual coordinates of the target object to be tracked correspond to the coordinates of the target, a success message is output.

## Revendications

1. Appareil de mesure (1, 2), en particulier scanner, pour la mesure optique d'un environnement par émission par scanning de rayonnement de mesure (13) avec
• un bâti (5) positionné rotatif autour d'un axe de base (4) sur une base (3),
• une source de rayonnement (6) logée dans le bâti (5) pour la production de rayonnement de mesure (13),
• une optique de rayonnement (7) logée dans le bâti (5) pour une évacuation du rayonnement de mesure (13) hors du bâti (5) et une transmission de rayonnement de réflexion (17) réfléchi à partir de l'environnement par un objet scanné à un détecteur (8) qui se trouve dans le bâti (5), cependant que le rayonnement de mesure (13) et le rayonnement de réflexion (17) ont au moins partiellement un trajet optique commun,
• une unité de déviation des rayons (10) située dans le trajet optique commun et positionnée rotative dans le bâti (5) autour d'un axe de rotation (11) pour l'émission dirigée réglable du rayonnement de mesure (13) dans l'environnement et pour capter le rayonnement de réflexion (17) provenant de l'environnement ;
• avec une caméra de mesure (80, 80a, 80b, 80c) intégrée à un corps de rotation (20) de l'unité de déviation des rayons (10) et rotative avec l'unité de déviation des rayons (10) lors d'un mouvement de rotation de l'unité de déviation des rayons (10) autour de son axe de rotation (11) pour la prise d'images photographiques de l'environnement à scanner ou scanné ;
• avec une unité de traitement et de commande (9) pour le traitement des données et des images et pour la commande de l'appareil de mesure (1, 2),
**caractérisé en ce que**
• la caméra de mesure (80c) qui possède un champ de vision (81c) est équipée et est placée dans l'unité de rotation de telle manière que son champ de vision (81c) est orienté dans la même direction que le rayonnement de mesure (13) émis dans l'environnement par un élément de déviation des rayons (22) de l'unité de déviation des rayons (10).

2. Appareil de mesure (1, 2) selon la revendication 1, **caractérisé en ce que** le champ de vision (81 c) de la caméra de mesure (80c) est orienté avec un décalage latéral dans la même direction que le rayonnement de mesure (13) émis dans l'environnement par l'élément de déviation des rayons (22) de l'unité de déviation des rayons (10).

3. Appareil de mesure (1, 2) selon la revendication 1, **caractérisé en ce que** la caméra de mesure (80c) est placée dans le corps de rotation (20) sur le côté arrière de l'élément de déviation des rayons (22) et l'élément de déviation des rayons (22) est configuré comme un séparateur de faisceau dichroïque qui ne dévie substantiellement que la longueur d'onde du rayonnement de mesure (13) et qui est transparent pour d'autres longueurs d'onde et cependant que le champ de vision (81c) de la caméra de mesure (80c) est orienté soit avec un léger décalage latéral, soit coaxial dans la même direction que le rayonnement de mesure (13) émis dans l'environnement par l'élément de déviation des rayons (22) de l'unité de déviation des rayons (10).

4. Appareil de mesure (1, 2) selon l'une des revendications précédentes, **caractérisé en ce qu'**il est prévu une source de lumière laser qui génère une lumière laser visible pour la caméra de mesure (80, 80a, 80b, 80c), cependant que la lumière laser de cette source de lumière laser peut être émise dans l'environnement en étant orientée dans la direction du champ de vision (81, 81a, 81 b, 81 c) de la caméra de mesure (80, 80a, 80b, 80c) de telle manière que la lumière laser visible peut être suivie par la caméra de mesure (80, 80a, 80b, 80c).

5. Appareil de mesure (1, 2) selon la revendication 4, **caractérisé en ce que** la source de lumière laser qui génère une lumière laser visible pour la caméra de mesure (80, 80a, 80b, 80c) fait partie d'un dispositif de mesure de la distance qui permet de déterminer la distance entre l'appareil de mesure (1, 2) et un objet qui réfléchit la lumière laser visible et la caméra de mesure sert de capteur du dispositif de mesure de la distance pour la mesure de la distance de la lumière au moyen de la lumière laser visible pour la caméra de mesure (80, 80a, 80b, 80c).

6. Appareil de mesure (1, 2) selon la revendication 5, **caractérisé en ce que** le dispositif de mesure de la distance est un dispositif de mesure de la distance qui se base sur le principe de la triangulation.

7. Appareil de mesure (1, 2) selon la revendication 5, **caractérisé en ce que** le dispositif de mesure de la distance est un dispositif de mesure de la distance qui se base sur le principe de la durée ou du déphasage et la caméra de mesure est en particulier une caméra à unité électronique de mesure de la distance EDM.

8. Procédé de mesure à exécuter avec un appareil de mesure (1, 2) selon l'une des revendications 1 à 7 pour lequel un environnement est mesuré de manière optique par émission par scanning de rayonnement de mesure (13) (scan de mesure), **caractérisé en ce qu'**une orientation de l'appareil de mesure (1, 2) se fait en utilisant un mode de mesure de points individuels, cependant que dans le mode de mesure de points individuels
• un point cible est visé à l'aide de la caméra de mesure (80, 80a, 80b, 80c),
• des coordonnées d'angle du point cible sont automatiquement détectées et
• la distance au point cible est déterminée automatiquement en même temps au moyen du rayonnement de mesure (13) orienté dans la même direction que le champ de vision (81) de la caméra de mesure (80, 80a, 80b, 80c)
• et une dérivation automatique des coordonnées spatiales du point cible se fait à partir de ces données, à savoir des coordonnées d'angle et de la distance.

9. Procédé de mesure selon la revendication 8, **caractérisé par le fait qu'**une mesure de 2 couches est exécutée avant la mesure optique de l'environnement au moyen de la caméra de mesure (80, 80a, 80b, 80c) qui regarde respectivement en direction du rayonnement de mesure émis et que des erreurs de la caméra de mesure dans la collimation horizontale et dans l'index vertical sont déterminées de manière automatisée au moyen de la mesure de 2 couches et qu'en option une détermination automatisée de l'oblicité de l'axe de rotation est effectuée et la caméra de mesure (80, 80a, 80b, 80c) est calibrée par rapport au système d'axe de l'instrument de mesure et en plus la position du faisceau laser de l'unité de scanner est calibrée en option par rapport au système d'axe avec la caméra de mesure déjà calibrée (80, 80a, 80b, 80c).

10. Procédé de mesure selon la revendication 8 ou 9, **caractérisé en ce qu'**une prise de mesures de l'appareil de mesure (1, 2) dans un système supérieur est effectuée avant la mesure optique de l'environnement, cependant qu'un ou plusieurs points cibles de référence du système supérieur sont visés à l'aide de la caméra de mesure (80, 80a, 80b, 80c) intégrée au corps de rotation (20) de l'appareil de mesure (1,2) et regardant dans la même direction que le rayonnement de mesure émis et qu'en même temps leurs coordonnées spatiales (coordonnées d'angle et distance) sont déterminées.

11. Procédé de mesure selon l'une des revendications 8 à 10, **caractérisé en ce qu'**il existe une source de lumière laser pour l'émission de lumière laser visible pour la caméra de mesure (80, 80a, 80b, 80c) et que celle-ci est émise en direction d'un point cible et le point cible est identifié au moyen de la lumière laser réfléchie, cependant que le point cible peut être fixe ou mobile, cependant que
• la visée et le marquage du point cible avec la lumière laser visible est poursuivi par la caméra de mesure (80, 80a, 80b, 80c), la caméra de mesure est amenée à coïncider avec le point cible marqué par la lumière laser
• et les coordonnées d'angle du point cible sont détectées et/ou
• la source de lumière laser qui émet la lumière visible pour la caméra de mesure est reliée à une unité de mesure de la distance de telle manière qu'une distance au point cible est déterminée en raison de la lumière laser visible réfléchie par le point cible et détectée par le dispositif de mesure de la distance, cependant que la caméra de mesure (80, 80a, 80b, 80c) sert de capteur du dispositif de mesure de la distance pour la mesure de distance de la lumière.

12. Procédé de mesure selon l'une des revendications 8 à 11, **caractérisé en ce qu'**à la suite d'une des étapes du procédé des revendications 8 à 11,
• un nombre suffisamment grand de points individuels d'un environnement ou d'un objet est visé par un utilisateur à l'aide de la caméra de mesure (80, 80a, 80b, 80c) et leurs coordonnées d'angle sont détectées si bien qu'une surface de projection d'un espace peut être définie par ces points et
• que l'espace qui correspond à la surface de projection définie de cette manière est ensuite mesurée par un scan de mesure.

13. Procédé de mesure selon l'une des revendications 8 à 12, **caractérisé en ce que** des images photographiques sont prises par la caméra de mesure (80, 80a, 80b, 80c) pendant le scan de mesure cependant que la vitesse de prise de vues avec laquelle les images sont prises est adaptée au champ de vision (81, 81a, 81b, 81c) de la caméra de mesure (80, 80a, 80b, 80c) et la vitesse de rotation de l'unité de déviation des rayons (10) autour de l'axe de rotation (11) et/ou la vitesse de rotation du bâti (5) autour de l'axe de la base (4) que, lors d'un assemblage des images qui ont été prises, on obtient une image panoramique cependant qu'on utilise comme caméra de mesure (80, 80a, 80b, 80c) en particulier une caméra linéaire RIM (Range Imaging).

14. Procédé de mesure selon l'une des revendications 8 à 11, **caractérisé en ce que** l'appareil de mesure (1, 2) dispose d'une unité de transmission (90) pour la réception et la transmission de données ainsi que d'un logiciel de traitement d'images avec reconnaissance de modèles et d'images et que pour l'orientation de l'appareil de mesure (1, 2)
• un modèle d'identification d'un objet recherché est transmis à la caméra de mesure (80, 80a, 80b, 80c), le modèle d'identification de l'objet est détecté et mémorisé comme référence par le logiciel de traitement d'images,
• l'environnement est exploré pour trouver l'objet recherché à l'aide de la rotation de la caméra de mesure (80, 80a, 80b, 80c) autour de l'axe de rotation (11) et de la rotation autour de l'axe de la base (4) et à l'aide du logiciel de traitement d'images et du modèle d'identification mémorisé comme référence par le logiciel de traitement d'images et lorsque l'objet recherché a été trouvé, les coordonnées spatiales de l'objet recherché sont générées par une détection de la distance et des coordonnées d'angle et sont éditées pour l'utilisateur.

15. Procédé de mesure selon l'une des revendications 8 à 11, **caractérisé en ce que** l'appareil de mesure (1, 2) dispose d'une unité de transmission (90) pour la réception et la transmission de données ainsi que d'un logiciel de traitement d'images et que pour l'orientation de l'appareil de mesure (1, 2)
• des coordonnées d'une cible recherchée sont transmises à l'appareil de mesure (1, 2) et sont mémorisées par celui-ci, cependant que la cible est un lieu cible, c'est-à-dire une cible fixe ou une trajectoire définie par ses coordonnées spatiales successives dans le temps à des moments t1 à ti ;
• un objet cible à poursuivre est visé comme point cible au moyen de la caméra de mesure (80, 80a, 80b, 80c), est photographié et la prise de vue photographique est mémorisée au moyen du logiciel de traitement d'images comme image de référence pour la reconnaissance et la poursuite de l'objet cible au moyen de la caméra de mesure ;
• les coordonnées réelles de l'objet cible à poursuivre sont déterminées et comparées aux coordonnées de la cible recherchée (lieu cible ou coordonnées spatiales de la trajectoire) et une instruction de déplacement dérivée de celles-ci est générée et émise à l'aide de laquelle l'objet cible à poursuivre est dirigé en direction de la cible, cependant que la caméra de mesure (80, 80a, 80b, 80c) reconnaît son objet cible à poursuivre à l'aide du logiciel de traitement d'images et de l'image de référence et suit son déplacement et cependant que les coordonnées réelles de l'objet cible à poursuivre sont détectées en continu et comparées aux coordonnées de la cible et l'instruction de déplacement est adaptée en conséquence et
• qu'un message de succès est édité lors de la concordance des coordonnées réelles de l'objet cible à poursuivre et des coordonnées de la cible.
